(19) Europäisches Patentamt
European Patent Office
Office européen des brevets

(11) **EP 4 335 711 A1**

(12) **EUROPEAN PATENT APPLICATION**

(43) Date of publication:
**13.03.2024 Bulletin 2024/11**

(21) Application number: **23194354.9**

(22) Date of filing: **30.08.2023**

(51) International Patent Classification (IPC):
**B60W 30/18** (2012.01)    **B60W 30/182** (2020.01)
**B60W 40/068** (2012.01)    **B60W 40/10** (2012.01)
**B60W 50/08** (2020.01)    **B60W 50/14** (2020.01)

(52) Cooperative Patent Classification (CPC):
**B60W 30/18172; B60K 35/10; B60K 35/28;**
**B60W 30/182; B60W 40/068; B60W 40/1005;**
**B60W 50/082; B60W 50/14;** B60K 2360/1442;
B60K 2360/172; B60W 2050/146; B60W 2540/215;
B60W 2552/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.09.2022 US 202217939079**

(71) Applicant: **VOLVO TRUCK CORPORATION**
**405 08 Göteborg (SE)**

(72) Inventors:
• **THERIEN, Julien**
**01340 MARSONNAS (FR)**
• **KHOURY, Jean**
**69007 LYON (FR)**

(74) Representative: **Kransell & Wennborg KB**
**P.O. Box 2096**
**403 12 Göteborg (SE)**

(54) **TRACTION CONTROL GUIDANCE SYSTEM FOR PROVIDING GUIDED TRACTION CONTROL SETTINGS BASED ON VEHICLE FRICTION CONDITIONS**

(57)    Traction control guidance system for providing guided traction control settings based on vehicle friction conditions. The traction control guidance system is configured to receive data relating to friction conditions experienced by the vehicle. The traction control guidance system is configured to compare the friction data to recommended traction control setting stored in memory according to a traction control setting guidance profile and provide to a user/driver the recommendations for traction control settings to be activated as traction control setting guidance. If the user/driver accepts the traction control setting guidance, this will cause a vehicle controller to activate the traction control settings according to the traction control settings included in the traction control setting guidance. In this manner, the user/driver is presented with recommended traction control settings to be activated for the current friction conditions of the vehicle without having to manually determine and set the desired traction control settings.

FIG. 2

## Description

## TECHNICAL FIELD

The disclosure relates generally to traction settings for a vehicle, including a heavy duty vehicle. In particular aspects, the disclosure relates to a traction control guidance system for providing guided traction control settings based on vehicle friction conditions.

The disclosure can be applied in heavy-duty vehicles, such as trucks, buses, and construction equipment. Although the aspects will be described with respect to a particular vehicle, the disclosure is not restricted to any particular vehicle or type of vehicle.

## BACKGROUND

Vehicles today are commonly equipped with traction control features. Traction control is an active safety feature that helps to keep traction between tires of a vehicle and a road in slippery or other dangerous conditions. To provide traction control features in a vehicle, the vehicle may be equipped with a traction control system (TCS). When the TCS system is activated, the TCS controls the transmission and engine to prevent the tires from spinning on slippery surfaces, and increases traction when accelerating.

A TCS can include a number of different traction features that when activated, perform a variety of functions related to traction intended for various road and load conditions. With a vehicle equipped with such a TCS that has various traction control features, the user/driver must know which traction control features to activate, and in the desired combinations, to achieve the desired traction control operation of the vehicle.

## SUMMARY

According to an aspect of the disclosure, a traction control guidance system for providing guided traction control settings based on vehicle friction conditions is provided. In exemplary aspects, the traction control guidance system is provided in a vehicle. The traction control guidance system includes a controller (e.g., a microcontroller, processor) that can be part of a computing device that executes software for example. The traction control guidance system can be provided as a separate controller or as part of a vehicle controller that controls other operations of the vehicle, including traction control. In exemplary aspects, the traction control guidance system is configured to receive data relating to friction conditions experienced by the vehicle. For example, this friction data could be data received directly or indirectly from sensors that measure information related to friction conditions experienced by the vehicle. As another example, the friction data could be data received from the vehicle controller that generates the data based on settings and/or data measured from sensors, or calculations thereof. The traction control guidance system is configured to compare the friction data to a traction control setting profile stored in memory, and based on the comparison, provide to a user/driver the recommendations for traction control settings to be activated as traction control setting guidance. In one example, the user/driver is free to either accept the traction control setting guidance or not accept the traction control setting guidance. If the user/driver selects to accept the traction control setting guidance, this will cause the vehicle controller to activate such selected traction control settings according to the traction control settings included in the traction control setting guidance. In this manner, the user/driver is presented with recommended traction control settings to be activated for the current friction conditions of the vehicle without having to manually determine and set the desired traction control settings. The user/driver may not have sufficient experience and/or data regarding the friction conditions experienced by the vehicle to make the best decision for traction control settings. The user can also choose to activate or de-activate traction control settings outside of the traction control setting guidance.

In one example, the traction control guidance system is configured to display the current traction control setting statuses (e.g., on or off) together on a display for convenience, which may be graphical user interface (GUI) display. The GUI display is configured to provide visual, touch control buttons for activation and deactivation of traction control settings. The traction control guidance system can also display the traction control setting guidance to the user/driver on the display as a prompt to accept, which can then be accepted by the user/driver to cause the traction control settings in the traction control setting guidance to be activated.

As another example, the traction control guidance system can recommend a single traction control feature or a combination of traction control features within a traction control setting guidance provided to a user/driver. For example, the traction control guidance system can recommend a differential lock feature as part of traction control setting guidance to force the wheels of a selected axle to turn at the same speed thus increasing the number of driven wheels, when activated. As another example, the traction control guidance system can recommend an optitrack feature as part of traction control setting guidance to control hydraulics to transfer torque from the engine to a front axle of the vehicle by controlling hydraulic pumps and motors to improve traction, when activated. As another example, the traction control guidance system can recommend an offroad mode feature as part of traction control setting guidance to place the anti-slip regulation (ASR) and gearbox in an offroad mode to allow more wheel slipping, which in return allows more power to be transferred from the engine to the axles, when activated. As another example, the traction control guidance system can recommend a muddy site feature as part of traction control setting guidance to prevent heavy pushing of the accelerator pedal to avoid over revving of the engine when the vehicle is detected to be encountering multiple heavy road bumps, when activated. As another example, the traction control guidance system can recommend an axle load optimization feature as part of traction control setting guidance that engages hydraulics to lift an axle that has less load to transfer and/or balance load on the axles of the vehicle, when activated. Activating axle load optimization can assist in providing increased traction for a vehicle moving from a standstill on a slippery road. In another example, at least one traction control setting of the computer system comprises a plurality of traction control settings comprising optitrack, muddy site, offroad mode, anti-slip regulation (ASR) off, axle load optimization, and differential lock.

In another example, the traction control guidance system is configured to continue to monitor the traction conditions experienced by the vehicle according to the received friction data. In another example, if the traction of the vehicle is deemed to be insufficient, the traction control guidance system can alter the traction control setting guidance provided to the user/driver to have an intended effect of increasing vehicle traction. If accepted by the user/driver, the traction control features according to the updated traction control setting guidance will be activated and/or deactivated according to the traction control setting guidance to increase the traction of the vehicle. In another example, if the traction of the vehicle is deemed to be sufficient, the traction control guidance system can also alter the traction control setting guidance provided to the user/driver, having the effect of reducing vehicle traction. If accepted by the user/driver, the traction control features according to the updated traction control setting guidance will be activated and/or deactivated to decrease the traction of the vehicle. The traction control guidance system can continue to determine and provide updated traction control setting guidance to a user/driver dynamically in response to determined traction conditions of the vehicle.

According to another aspect of the disclosure, a method is provided. The method comprises receiving, by a processor of at least one computing device, friction data relating to at least one friction condition experienced by a vehicle. The method also comprises comparing, by the processor, the received friction data to at least one traction control setting profile each comprising one or more traction control settings. The method also comprises determining, by the processor, a recommended traction control setting profile of the at least one traction control setting profile corresponding to the received friction data. The method also comprises communicating, by the processor, a recommended at least one traction control setting of the one or more traction control settings for the recommended traction control setting profile to a display, to be displayed.

According to another aspect of the disclosure, a vehicle comprising a processor device configured to perform the method described in the immediately preceding paragraph is provided.

According to another aspect of the disclosure, a computer system is provided. The computer system comprises at least one computing device comprising a processor device configured to: receive friction data relating to at least one friction condition experienced by a vehicle, compare the received friction data to at least one traction control setting profile each comprising one or more traction control settings, determine a recommended traction control setting profile of the at least one traction control setting profile corresponding to the received friction data, and communicate a recommended at least one traction control setting of the one or more traction control settings for the recommended traction control setting profile to a display, to be displayed.

According to another aspect of the disclosure, a non-transitory computer-readable storage medium is provided. The non-transitory computer-readable storage medium comprises programming instructions, which, when executed by a processor device of a computing system, cause the processor device to: receive friction data relating to at least one friction condition experienced by a vehicle, compare the received friction data to at least one traction control setting profile each comprising one or more traction control settings, determine a recommended traction control setting profile of the at least one traction control setting profile corresponding to the received friction data, and communicate a recommended at least one traction control setting of the one or more traction control settings for the recommended traction control setting profile to a display, to be displayed.

Additional features and advantages are disclosed in the following description, claims, and drawings, and in part will be readily apparent therefrom to those skilled in the art or recognized by practicing the embodiments as described herein.

## BRIEF DESCRIPTION OF THE DRAWINGS

With reference to the appended drawings, below follows a more detailed description of embodiments of the invention cited as examples.

FIG. 1 is an exemplary vehicle that includes traction control system (TCS) that can have various traction control features that each can be engaged to control operation of the vehicle to increase traction between the vehicle tires and the road;

FIG. 2 is a display that includes a graphical user interface (GUI) that can be displayed on a display in a vehicle, including the vehicle in **FIG. 1,** for displaying current traction control settings for the vehicle and for providing suggested, guided traction control settings to a user/driver to be activated based on friction conditions experienced by the vehicle according to one example;

FIG. 3 is a traction control guidance system that can be included in a vehicle, including the vehicle in **FIG. 1,** and that receives friction data of vehicle traction conditions experienced by a vehicle, and generates guided traction control settings based on the friction data, to be communicated to a user/driver of the vehicle suggested for activation according to one example;

**FIG. 4** is a diagram illustrating an exemplary parameters that can be used by the traction control guidance system in **FIG. 3** to generate guided traction control settings to be communicated to a user/driver of the vehicle suggested for activation according to one example;

**FIG. 5** is a flowchart of an exemplary method that can be performed by the traction control guidance system in **FIG. 3** to determine and generate guided traction control settings to be communicated to a user/driver of the vehicle suggested for activation based on vehicle traction conditions according to one example;

**FIG. 6A** is a diagram illustrating an exemplary average to high friction and low rolling resistance conditions traction control setting profile used by the traction control guidance system in **FIG. 3** to determine guided traction control settings based on the friction data, when the vehicle is experiencing average to high friction and lower rolling resistance conditions in one example;

**FIG. 6B** is a diagram illustrating another exemplary low friction and low rolling resistance traction control setting profile used by the traction control guidance system in **FIG. 3** to determine guided traction control settings based on the friction data, when the vehicle is experiencing low friction and lower rolling resistance conditions in one example;

**FIG. 6C** is a diagram illustrating another exemplary average friction and high rolling resistance traction control setting profile used by the traction control guidance system in **FIG. 3** to determine guided traction control settings based on the friction data, when the vehicle is experiencing average friction and higher rolling resistance conditions in one example;

**FIG. 7A** is an illustration of an exemplary GUI generated by the traction control guidance system in **FIG. 3** and displayed on a display in a vehicle, to visually indicate a current activated optitrack traction control setting for a vehicle according to one example;

**FIG. 7B** is an illustration of an exemplary GUI generated by the traction control guidance system in **FIG. 3** and displayed on a display in a vehicle, to visually indicate a current activated muddy site traction control setting for a vehicle according to one example;

**FIG. 7C** is an illustration of an exemplary GUI generated by the traction control guidance system in **FIG. 3** and displayed on a display in a vehicle, to visually indicate a current activated offroad mode traction control setting for a vehicle according to one example;

**FIG. 7D** is an illustration of an exemplary GUI generated by the traction control guidance system in **FIG. 3** and displayed on a display in a vehicle, to visually indicate a current activated anti-slip regulation (ASR) off control setting for a vehicle according to one example;

**FIG. 7E** is an illustration of an exemplary GUI generated by the traction control guidance system in **FIG. 3** and displayed on a display in a vehicle, to visually indicate a current activated axle load optimization traction control setting for a vehicle according to one example;

**FIG. 7F** is an illustration of an exemplary GUI generated by the traction control guidance system in **FIG. 3** and displayed on a display in a vehicle, to visually indicate a current activated differential lock traction control setting for a vehicle according to one example; and

**FIG. 8** is a block diagram of an exemplary computer system that can be included in a guided traction control system, including but not limited to the traction guidance control system in **FIG. 3,** to determine and generate guided traction control settings to be communicated to a user/driver of the vehicle suggested for activation based on vehicle traction conditions according to one example.

**DETAILED DESCRIPTION**

The embodiments set forth below represent the necessary information to enable those skilled in the art to practice the embodiments and illustrate the best mode of practicing the embodiments.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

According to an aspect of the disclosure, a traction control guidance system for providing guided traction control settings based on vehicle friction conditions is provided. In exemplary aspects, the traction control guidance system is provided in a vehicle. The traction control guidance system includes a controller (e.g., a microcontroller, processor) that can be part of a computing device that executes software for example. The traction control guidance system can be provided as a separate controller or as part of a vehicle controller that controls other operations of the vehicle, including traction control. In exemplary aspects, the traction control guidance system is configured to receive data relating to friction conditions experienced by the vehicle. For example, this friction data could be data received directly or indirectly from sensors that measure information related to friction conditions experienced by the vehicle. As another example, the friction data could be data received from the vehicle controller that generates the data based on settings and/or data measured from sensors, or calculations thereof. The traction control guidance system is configured to compare the friction data to a traction control setting profile stored in memory, and based on the comparison, provide to a user/driver the recommendations for traction control settings to be activated as traction control setting guidance. In one example, the user/driver is free to either accept the traction control setting guidance or not accept the traction control setting guidance. If the user/driver selects to accept the traction control setting guidance, this will cause the vehicle controller to activate such selected traction control settings according to the traction control settings included in the traction control setting guidance. In this manner, the user/driver is presented with recommended traction control settings to be activated for the current friction conditions of the vehicle without having to manually determine and set the desired traction control settings. The user/driver may not have sufficient experience and/or data regarding the friction conditions experienced by the vehicle to make the best decision for traction control settings. The user/driver can also choose to activate or de-activate traction control settings outside of the traction control setting guidance.

In one example, the traction control guidance system is configured to display the current traction control setting statuses (e.g., on or off) together on a display for convenience, which may be graphical user interface (GUI) display. The GUI display is configured to provide visual, touch control buttons for activation and deactivation of traction control settings. The traction control guidance system can also display the traction control setting guidance to the user/driver on the display as a prompt to accept, which can then be accepted by the user/driver to cause the traction control settings in the traction control setting guidance to be activated.

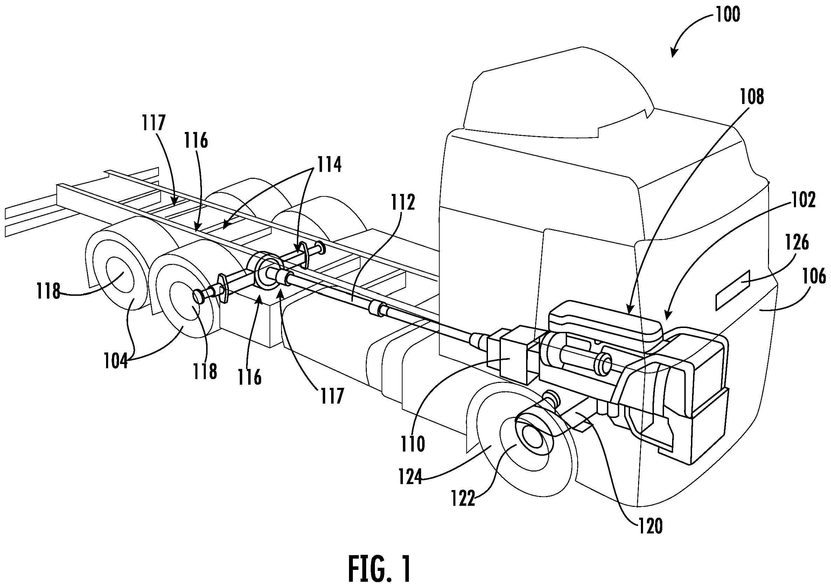

In this regard, **FIG. 1** is an exemplary vehicle **100** that includes traction control system (TCS) **102**. As discussed in more detail below, the TCS **102** can have various traction control features that each can be engaged to control operation of the vehicle **100** to increase traction between vehicle tires and a road. As shown in **FIG. 1,** the vehicle **100** includes a cab **106** that houses an engine **108**. The engine **108** is coupled to a gearbox **110** to couple the engine **108** to a drive shaft **112** to turn the drive shaft **112**. In turn, the drive shaft **112** is coupled to a rear differential **116** that is coupled to a rear axle **114**. The rotation of the drive shaft **112** will cause the power of the engine **108** to be transferred to the rear axle **114** through the rear differential **116** to rotate wheels **118** coupled to the rear axle **114,** and thus rotate the rear tires **104** mounted on the wheels **118**. In this example, the vehicle **100** is a truck that includes two rear axles **114** that are coupled to respective wheels. In this example, the vehicle **100** is also equipped to be operated in four wheel drive (4WD), wherein the drive shaft **112** will be coupled to a front axle **120** that is coupled to front wheels **122,** to drive power to the front wheels **122** causing the front wheels **122** and their mounted tires **124** to rotate. The vehicle **100** may also include rear axles pumps **117** that each include for example, a hydraulic pump, to control a lifting force applied to the respective rear axles **114** to alter the load distribution on the rear axles **114** of the vehicle **100**.

As an example, the TCS **102** of the vehicle **100** may include a rear differential lock feature that, when activated, the rear differential **116** forces wheels on one or more rear axles **114** to turn at the same speed, thus increasing the number of driven wheels **118**. The TCS **102** may also include an optitrack feature that, when activated, controls hydraulics to transfer torque from the engine **108** to the front axle **120** of the vehicle **100** by controlling hydraulic pumps and motors to improve traction. The TCS **102** may also include an offroad mode feature that when activated, places an anti-slip regulation (ASR) and gearbox **110** of the vehicle **100** in an offroad mode to allow more wheel slipping. This in return allows more power to be transferred from the engine **108** to the rear axles **114** and/or the front axle **120**. The TCS **102** may also include a muddy site feature that when activated, prevents heavy pushing of the accelerator pedal to avoid over revving of the engine **108** when the vehicle **100** is detected to be encountering multiple heavy road bumps for example. The TCS **102** may also include an axle load optimization feature that when activated, engages hydraulics to lift the rear axle **114** and/or the front axle **120** that has less load to transfer and/or balance load on the rear axles **114** and/or the front axle **120** of the vehicle **100**. Activating axle load optimization can assist in providing increased traction for the vehicle **100** moving from a standstill on a slippery road.

As discussed in more detail below, the vehicle **100** can also include a traction control guidance system **126** for providing guided traction control settings based on friction conditions experienced by the vehicle **100**. As discussed in more detail below, the traction control guidance system **126** can be a processor or other electronic controller as part of a computing device, and that can execute software to perform tasks. For example, the traction control guidance system **126** can be configured to provide the guided traction control settings based on friction conditions experienced by the vehicle **100** to a user/driver as a recommendation so that the user/driver can choose to accept the recommendation for such traction control settings to then automatically be activated in response. The traction control guidance system **126** can be part of a computing device that executes software for example. In exemplary aspects, as discussed in more detail below, the traction control guidance system **126** is configured to receive data relating to friction conditions experienced by the vehicle **100**. For example, this friction data could be data received directly or indirectly from sensors that measure information related to friction conditions experienced by the vehicle **100**. The traction control guidance system **126** is configured to compare the friction data to a traction control setting profile stored in memory, and based on the comparison, provide to a user/driver the recommendations for traction control settings to be activated as traction control setting guidance. In one example, the user/driver is free to either accept the traction control setting guidance or not accept the traction control setting guidance. If the user/driver selects to accept the traction control setting guidance, this will cause the vehicle **100** to activate such selected traction control settings according to the traction control settings included in the traction control setting guidance. In this manner, the user/driver is presented with recommended traction control settings to be activated for the current friction conditions of the vehicle **100** without having to manually determine and set the desired traction control settings. The user/driver may not have sufficient experience and/or data regarding the friction conditions experienced by the vehicle **100** to make the best decision for traction control settings. The user/driver can also choose to activate or de-activate traction control settings outside of the traction control setting guidance.

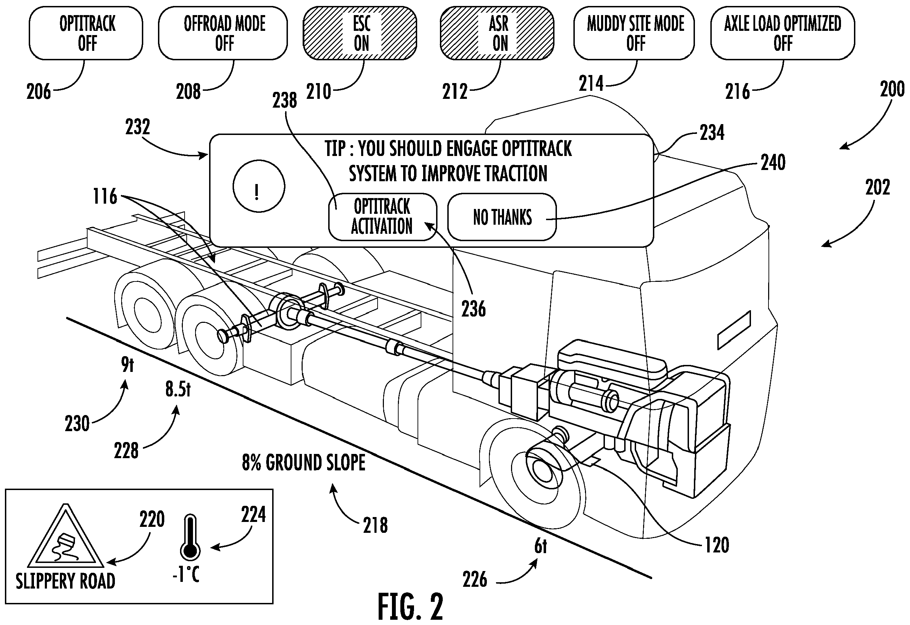

In on example, to provide a convenient method of displaying the current status of traction control settings activated by the TCS **102** for the vehicle **100** in FIG. 1 to a user/driver in a consolidated manner, a display **200** in **FIG. 2** can be provided in the vehicle **100** and visually accessible to a user/driver. The display **200** is an electronic display device that includes a screen that displays visually-perceptible information (e.g., by controlling color and intensity of pixels). In this example, as discussed in more detail below, the traction control guidance system **126** is configured to display the current traction control setting activation statuses (e.g., on (activated) or off (deactivated)) together on the display **200** in a single graphical user interface (GUI) **202**. The traction control guidance system **126** is also configured to generate a display of a vehicle **204** as part of the GUI **202** to visually show a representation of the vehicle **100** in **FIG. 1** and its various components that are involved in traction control for the vehicle **100,** described above, according to the current traction control feature(s) activated for the vehicle **100**. In this manner, the user/driver is presented with consolidated information visually on the display **200** as to the status of traction control features in the vehicle **100** for convenience in access and control As will be discussed in more detail below, the traction control guidance system **126** can also be configured to highlight various components of the vehicle **204** to show which components are being actively controlled in some manner as part of a current activated traction control setting, so that a user/driver can easily have a visual indication of traction control features engaged for the vehicle **100** in one convenient area in the GUI **202** of the display **200**.

With continuing reference to **FIG. 2,** the traction control guidance system **126** generates visual, touch control buttons in the GUI **202** to provide a current activation status of traction control settings available on the vehicle **100** as well as a visual indication if such traction control features are currently active. For example, the traction control guidance system **126** is configured to display the status of the optitrack traction control feature by generating an optitrack visual traction control button **206** as part of the GUI **202**. The traction control guidance system **126** is configured to display the current status of the optitrack traction control feature as "ON" for activated, and "OFF" for not activated in the optitrack visual traction control button **206**. As another example, the traction control guidance system **126** is configured to display the status of the offroad mode traction control feature by generating an offroad mode visual traction control button **208** as part of the GUI **202**. The traction control guidance system **126** is configured to display the current status of the offroad mode traction control feature as "ON" for activated, and "OFF" for not activated in the offroad mode visual traction control button **208**. As another example, the traction control guidance system **126** is configured to display the status of the electronic stability control (ESC) traction control feature by generating an ESC visual traction control button **210** as part of the GUI **202**. The traction control guidance system **126** is configured to display the current status of the ESC traction control feature as "ON" for activated, and "OFF" for not activated in the ESC visual traction control button **210**.

As another example, the traction control guidance system **126** is configured to display the status of the anti-slip regulation (ASR) traction control feature by generating an ASR visual traction control button **212** as part of the GUI **202**. The traction control guidance system **126** is configured to display the current status of the ASR traction control feature as "ON" for activated, and "OFF" for not activated in the ASR visual traction control button **212**. As another example, the traction control guidance system **126** is configured to display the status of the muddy site mode traction control feature by generating a muddy site mode traction control button **214** as part of the GUI **202**. The traction control guidance system **126** is configured to display the current status of the muddy site mode traction control feature as "ON" for activated, and "OFF" for not activated in the muddy site mode visual traction control button **214**. As another example, the traction control guidance system **126** is configured to display the status of the axle load optimization traction control feature by generating an axle load optimization button **216** as part of the **GUI 202**. The traction control guidance system **126** is configured to display the current status of the axle load optimization traction control feature as "ON" for activated, and "OFF" for not activated in the axle load optimization visual traction control button **216**.

With continuing reference to **FIG. 2,** by providing the traction control guidance system **126** and display **200** providing the GUI **202**, the traction control guidance system **126** can be configured to activate and deactivate the various traction control features available in the vehicle **100** based on user/driver input. The display **200** is configured to receive as input the physical selection by the user/driver of any traction control button **206, 208, 210, 212, 214, 216** described above to toggle the activation and deactivation of such traction control feature as the user/driver's direction. The display **200** in this example is a touch screen display, such that a user/driver can press the area of traction control button **206, 208, 210, 212, 214, 216** displayed in the GUI **202** on the display **200** to toggle off and on the activation and deactivation of the optitrack traction control for the vehicle **100** as desired by the user/driver. For example, as shown in **FIG. 2,** in this example, the ESC visual traction control button **210** and ASR visual traction control button **212** are both controlled to indicate an "ON" status by the traction control guidance system **126** indicating that such traction control features are current activated, while the other traction control buttons **206, 208, 214, 216** indicate an "OFF" status meaning they are currently inactivated. The user/driver can simply press any of the traction control buttons **206, 208, 210, 212, 214, 216** to toggle their ON/OFF status, which in turn will cause the traction control guidance system **126** to communicate to the TCS **102** to activate or deactivate such traction control features for the vehicle **100**.

As also shown in **FIG. 2,** the traction control guidance system **126** can also cause the current ground slope **218** experienced by the vehicle **100** to also be displayed as part of the GUI **202** on the display **200** for the user/driver's convenience. The traction control guidance system **126** can also cause a current ground condition **220** experienced by the vehicle **100** as well as the outside ambient temperature of the vehicle **100** to be displayed as part of the GUI **202** on the display **200** for the user/driver's convenience. The traction control guidance system **126** can also cause load **226, 228, 230** (e.g., in tons) measured at each of the front axle **120** and rear axles **114** to be displayed as part of the GUI **202** on the display **200** for the user/driver's convenience.

Further, as shown in **FIG. 2,** and described in more detail below, the traction control guidance system **126** can also generate a determined guided traction control settings recommendation **232** to be displayed visually in the GUI **202** on the display **200** to a user/driver based on friction conditions experienced by the vehicle **100**. As shown in **FIG. 2,** the traction control guidance system **126** generated the guided traction control setting recommendation **232** as a pop-up window **234** that indicates the recommended traction control setting **232** (which is optitrack in this example) in the form of a guided traction control button **238**. If the user/driver selects the guided traction control button **238,** the traction control guidance system **126** will cause the guided traction control setting recommendation **232** to be communicated to the TCS **102** to then be activated as a traction control setting for the vehicle **100**. The traction control guidance system **126** will also cause the traction control button **206, 208, 210, 212, 214, 216** as part of the GUI **202** to be updated to display the correct, current traction control statutes based on the guided traction control setting recommendation **232**. In this manner, if the user/driver wants to accept the guided traction control setting recommendation **232** generated by the traction control guidance system **126,** the user/driver can easily and conveniently choose to accept the recommendation with the selection of a single guided traction control button **238**. If the user/driver does not want to accept the guided traction control setting recommendation **232** generated by the traction control guidance system **126,** the user/driver can select a decline button **240** generated by the traction control guidance system **126** as part of the pop-up window **234** displayed on the display **200,** in which case no current activated and deactivated traction control settings are changed by the TCS **102** and in the GUI **202**.

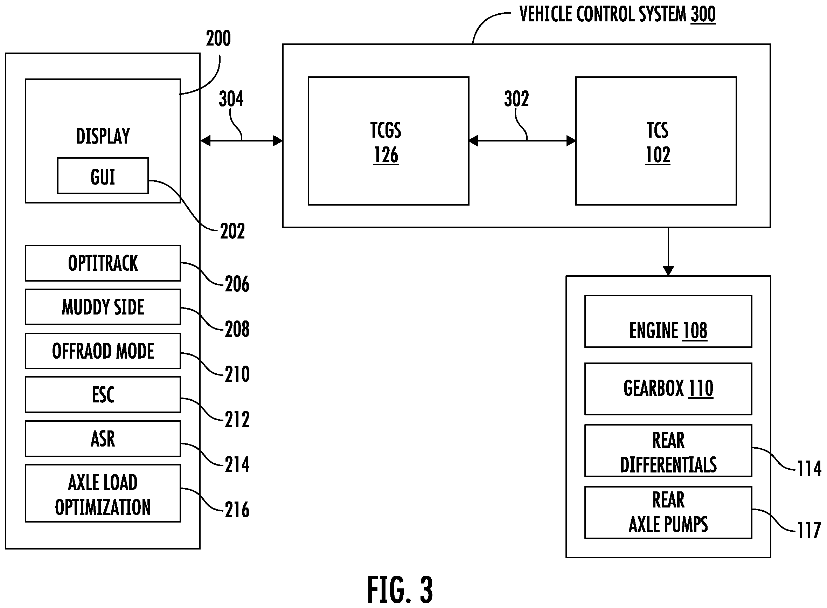

**FIG. 3** is another diagram of a traction control guidance system **126** that can be included in a vehicle, including the vehicle **100** in **FIG. 1,** to generate guided traction control settings based on the friction data relating to the traction experienced by the vehicle. The traction control guidance system **126** is a processor (or central processing unit CPU)) as part of a computing device in this example that can execute software to perform tasks. In this example, the traction control guidance system **126** is provided as part of a vehicle control system **300,** which may also be referred to as a vehicle controller. The traction control guidance system **126** is communicatively coupled through an interface **302** to the TCS **102,** which as discussed above is configured to activate and deactivate traction control settings for a vehicle to control the traction control features of a vehicle, including vehicle **100.** The vehicle control system **300** is described with reference to the exemplary vehicle **100** in **FIG. 1.** The TCS **102** is configured to control functions of the engine **108,** the gearbox **110,** the rear differentials **116** and the rear axle pump **117** to control various traction control features as described above. The TCS **102** can be an electronic control device, such as a processor (or CPU) as part of a computing device in this example that can execute software to perform tasks to control traction control for the vehicle **100.**

With continuing reference to **FIG. 3,** the traction control guidance system **126** is communicatively coupled through an interface **304** to the display **200** to control the information displayed on the display **200.** In this example, as discussed above and shown in the example in **FIG. 2,** the traction control guidance system **126** is configured to generate a GUI **202** to be displayed on the display **200** to a user/driver. The display **200** can be a touch screen display that allows a user/driver to touch the display **200** to provide input that is then communicated over the interface **304** to the traction control guidance system **126.** For example, as discussed in **FIG. 2** above, the GUI **202** can include the traction control buttons **206, 208, 210, 212, 214, 216** that can be controlled by the traction control guidance system **126** to indicate both a textual and visual indication of status as on or off, as well as providing input buttons that can be selected by the user/driver to toggle the on/off control for activation/deactivation of the respective traction control setting. In response to selection of a traction control buttons **206, 208, 210, 212, 214, 216** to change the activation status of a traction control setting, the display **200** communicates this response to the traction control guidance system **126,** which in turn communicates the new setting for the selected traction control feature to the TCS **102.** The TCS **102** then changes the traction control settings for the vehicle **100** to activate or deactivate the selected traction control feature according to the received input from the user/driver on the display **200.** The traction control guidance system **126** also changes the GUI **202** to update the new activation status of the selected traction control feature by adjusting the textual and/or visual indicators for the relevant traction control button **206, 208, 210, 212, 214, 216** of the GUI **202.**

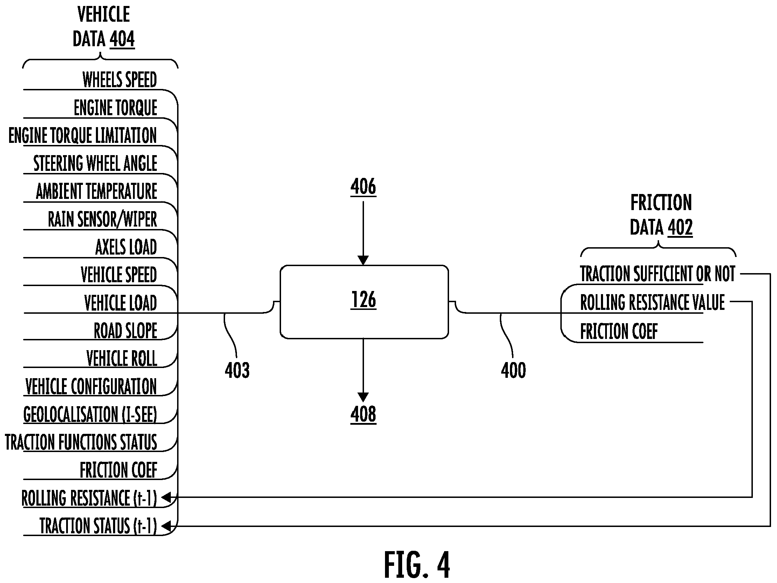

As discussed above, the traction control guidance system **126** is configured to provide guided traction control settings to a user/driver based on the traction conditions experienced by the vehicle **100.** In this regard, **FIG. 4** is a diagram illustrating exemplary parameters that can be used by the traction control guidance system **126** in **FIG. 3** to generate guided traction control settings to be communicated to a user/driver of the vehicle **100** suggested for activation according to one example. As shown in **FIG. 4,** the traction control guidance system **126** in this example is configured to generate as outputs **400,** friction data **402** that can then be used to determine guided traction control settings to be provided to the display **200** in **FIG. 2** for example. The friction data **402** in this example includes rolling resistance, friction coefficient, and an indication if traction of the vehicle **100** is sufficient or insufficient. The traction control guidance system **126** is configured to generate the friction data **402** based on one or more types of vehicle data **404** that is provided by the TCS **102** or other component of the vehicle **100,** to the traction control guidance system **126** through an interface **403** as inputs. The vehicle data **404** can include, for example, one or more of the following friction data: wheel speed, engine torque, engine torque limitation, steering wheel angle, ambient temperature, rain sensor/wiper information, axle loads, vehicle speed, vehicle load, road slope, vehicle roll, vehicle configuration, geolocalization, traction function status, friction coefficient, rolling resistance, and traction status. Note that the friction data **402** can also include one or more of the vehicle data **404** in its original form.

Rolling resistance, sometimes called rolling friction or rolling drag, is the force resisting the motion when a body (such as a ball, tire, or wheel) rolls on a surface. It is mainly caused by non-elastic effects; that is, not all the energy needed for deformation (or movement) of the wheel, roadbed, etc., is recovered when the pressure is removed. Factors that contribute to rolling resistance are the (amount of) deformation of the wheels, the deformation of the roadbed surface, and movement below the surface. Additional contributing factors include wheel diameter, load on wheel, surface adhesion, sliding, and relative micro-sliding between the surfaces of contact. The losses due to hysteresis also depend strongly on the material properties of the wheel or tire and the surface. For example, a rubber tire will have higher rolling resistance on a paved road than a steel railroad wheel on a steel rail. Also, sand on the ground will give more rolling resistance than concrete. Sole rolling resistance factor is not dependent on speed.

The "rolling resistance coefficient" is defined by the following equation:

$$\mathbf{F} = \mathbf{C_{rr}}\, \mathbf{N}$$

where

    $\mathbf{F}$ is the rolling resistance force,
    $\mathbf{C_{rr}}$ is the dimensionless rolling resistance coefficient or coefficient of rolling friction (CRF), and
    N is the normal force, the force perpendicular to the surface on which the wheel is rolling.

The above shows resistance proportional to Crr but does not explicitly show any variation with speed, loads, torque, surface roughness, diameter, tire inflation/wear, etc., because Crr itself varies with those factors. It might seem from the above definition of Crr that the rolling resistance is directly proportional to vehicle weight, but it is not.

The coefficient of rolling resistance for a slow rigid wheel on a perfectly elastic surface, not adjusted for velocity, can be calculated by:

$$\mathbf{C_{rr}} = \sqrt{\frac{z}{d}}$$

where

    $z$ is the sinkage depth
    $d$ is the diameter of the rigid wheel

As an alternative to using $\mathbf{C_{rr}}$ one can use $\mathbf{b}$ which is a different **rolling resistance coefficient** or **coefficient of rolling friction** with dimension of length. It is defined by the following formula:

$$F = \frac{Nb}{r}$$

where

    $F$ is the rolling resistance force,
    $r$ is the wheel radius,
    $b$ is the **rolling resistance coefficient** or **coefficient of rolling friction** with dimension of length, and
    $N$ is the normal force.

The above equation, where resistance is inversely proportional to radius r seems to be based on the discredited "Coulomb's law" (Neither Coulomb's inverse square law nor Coulomb's law of friction). Equating this equation with the force per the rolling resistance coefficient, and solving for b, gives b = $\mathbf{C_{rr}}$ r. Therefore, if a source gives rolling resistance coefficient as a dimensionless coefficient, it can be converted to $\mathbf{b}$, having units of length, by multiplying $\mathbf{C_{rr}}$ by wheel radius $\mathbf{r}$.

Friction is desirable and important in supplying traction to facilitate motion on land. Most land vehicles rely on friction for acceleration, deceleration, and changing direction. Sudden reductions in traction can cause loss of control and accidents.

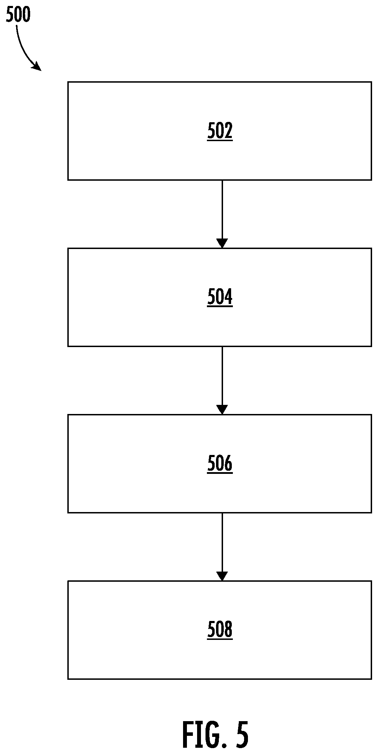

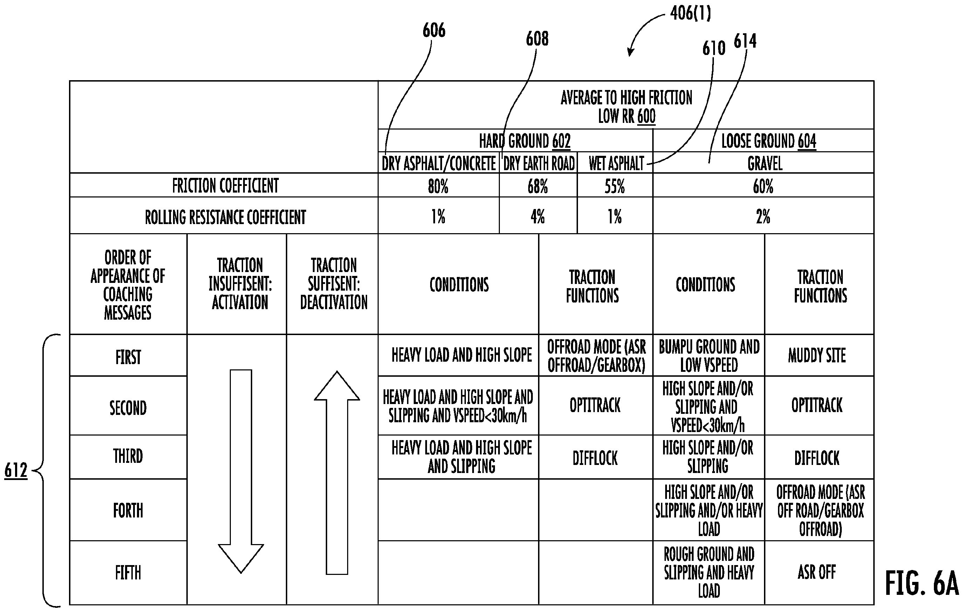

As shown in the exemplary process **500** of providing guided traction control settings in **FIG. 5** with reference to **FIG. 4**, the traction control guidance system **126** is configured to receive the friction data **402** relating to at least one friction condition experienced by a vehicle **100** (block **502** in **FIG. 5**). The traction control guidance system **126** is configured to compare the received friction data **402** to at least one traction control setting profile **406** each comprising one or more traction control settings (block **504** in **FIG. 5**). Examples of traction control setting profiles **406** that include one or more traction control settings are described later below with regard to **FIGS. 6A-6C**. The traction control guidance system **126** is then configured to determine a recommended traction control setting profile **406** of the at least one traction control setting profile **406** corresponding to the received friction data **402** (block **506** in **FIG. 5**). The traction control guidance system **126** is then configured to communicate a recommended at least one traction control setting of the one or more traction control settings as a guided traction control setting recommendation **408** (e.g., guided traction control setting recommendation **232** in **FIG. 2**) for the recommended traction control setting profile **406** to a display **200**, to be displayed (block **508** in **FIG. 5**).

**FIG. 6A** is a diagram illustrating an exemplary average to high friction and low rolling resistance traction control setting profile **600** as one traction control setting profile **406(1)** that can used by the traction control guidance system **126** in **FIG. 3** to determine guided traction control settings based on friction data, such as the friction data **402** in **FIG. 4**. The high friction and low rolling resistance traction control setting profile **600** in **FIG. 6A** in this example for when the vehicle **100** is determined by the traction control guidance system **126** to be experiencing average to high friction and lower rolling resistance conditions, based on the received friction data **402**. The traction control guidance system **126** to processes the vehicle data **404** to determine the friction data **402** in **FIG. 4** that can then be used to compare to one or more traction control setting profiles **406** that can include the high friction and low rolling resistance traction control setting profile **600**. If, for example, the traction control guidance system **126** determines the friction data **402** best matches the average to high friction and low rolling resistance traction control setting profile **600** in **FIG. 6A**, as discussed in more detail below, the traction control guidance system **126** uses the traction control settings in the average to high friction and low rolling resistance traction control setting profile **600** to generate the guided traction control setting recommendation **408** to the user/driver.

In this regard, with reference to **FIG. 6A**, the average to high friction and low rolling resistance traction control setting profile **600** includes a hard ground traction control setting profile **602** and a loose ground traction control setting profile **604**. The hard ground traction control setting profile **602** and a loose ground traction control setting profile **604** for the profile **600** are based on the friction coefficient and rolling resistance coefficient calculated as friction data **402** by the traction control guidance system **126** based on the vehicle data **404** in **FIG. 4** in this example. The hard ground traction control setting profiles **602** includes the traction control setting sub-profiles as dry asphalt/concrete profile **606**, dry earth road profile **608,** and wet asphalt profile **610.** In this example, the dry asphalt/concrete profile **606** corresponds to an 80% friction coefficient and a 1% rolling resistance coefficient, the dry earth road profile **608** corresponds to a 68% friction coefficient and a 4% rolling resistance coefficient, and the wet asphalt profile **610** corresponds to a 55% friction coefficient and a 1% rolling resistance coefficient. In another example, the hard ground traction control setting profiles **602** could include the traction control setting sub-profile as a >= 75% friction coefficient and a <= 2% rolling resistance coefficient. In another example, the hard ground traction control setting profiles **602** could include the traction control setting sub-profile as a >= 62% friction coefficient and a 3%-6% rolling resistance coefficient. In yet another example, the hard ground traction control setting profiles **602** could include the traction control setting sub-profile as a 30%-55% friction coefficient and a <=2% rolling resistance coefficient. If the traction control guidance system **126** determines that the friction coefficient and rolling resistance coefficient of one of the hard ground traction control setting profiles **602** best corresponds to the friction data **402,** the traction control guidance system **126** can use the traction control settings **612** corresponding to the selected hard ground traction control setting profile **602** to provide the guided traction control setting recommendation **408** to the display **200** to be presented to the user/driver.

With continuing reference to **FIG. 6A,** for each of the three traction control setting sub-profiles of dry asphalt/concrete profile **606,** dry earth road profile **608,** and wet asphalt profile **610,** the traction control settings are the same. The first traction control setting for the hard ground traction control setting profile **602** is offroad mode. The second traction control setting for the hard ground traction control setting profile **602** is optitrack. The third traction control setting for the hard ground traction control setting profile **602** is differential lock. For the first instance of a determined fit between the friction data **402** and the hard ground traction control setting profile **602,** the traction control guidance system **126** will generate the first traction control setting in **FIG. 6A** (offroad mode) as the guided traction control setting recommendation **408** to the display **200** to be presented to the user/driver. The traction control guidance system **126** will continue to receive the vehicle data **404** and determine the friction data **402** based on the received vehicle data **404.** If the traction control guidance system **126** determines that its friction data **402** still indicates an insufficient traction for the vehicle **100,** and the hard ground traction control setting profile **602** is still determined to be the best fit of the friction data **402** to a traction control setting profile **406,** the traction control guidance system **126** will then generate the second traction control setting **FIG. 6A** (optitrack) as the guided traction control setting recommendation **408** to the display **200** to be presented to the user/driver as an additional traction control that will increase traction for the vehicle **100** if the user/driver had selected the first traction control setting.

If the traction control guidance system **126** determines that its friction data **402** still indicates an insufficient traction for the vehicle **100,** and the hard ground traction control setting profile **602** is still determined to be the best fit of the friction data **402** to a traction control setting profile **406,** the traction control guidance system **126** will then generate the third traction control setting in **FIG. 6A** (differential lock) as the guided traction control setting recommendation **408** to the display **200** to be presented to the user/driver as an additional traction control that will increase traction for the vehicle **100,** if the user/driver had selected the second traction control setting. If at any time, the traction control guidance system **126** determines that its friction data **402** indicates a sufficient traction for the vehicle **100,** and the hard ground traction control setting profile **602** is still determined to be the best fit of the friction data **402** to a traction control setting profile **406,** the traction control guidance system **126** will then reduce the traction control setting to the next lower setting as the guided traction control setting recommendation **408** to the display **200** to be presented to the user/driver as reduced traction control that will decrease traction for the vehicle **100.** This process continues in a repeated manner.

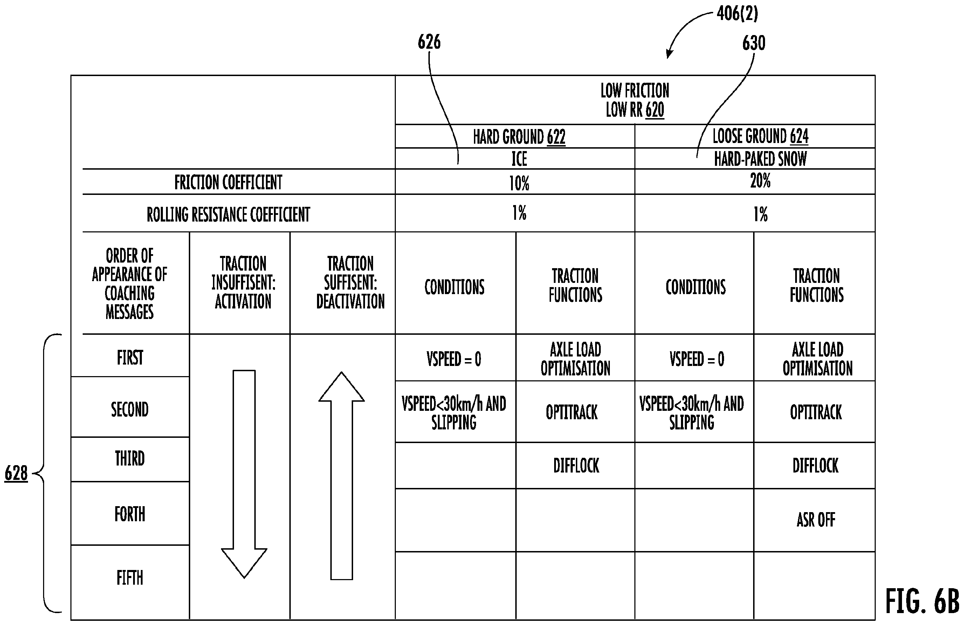

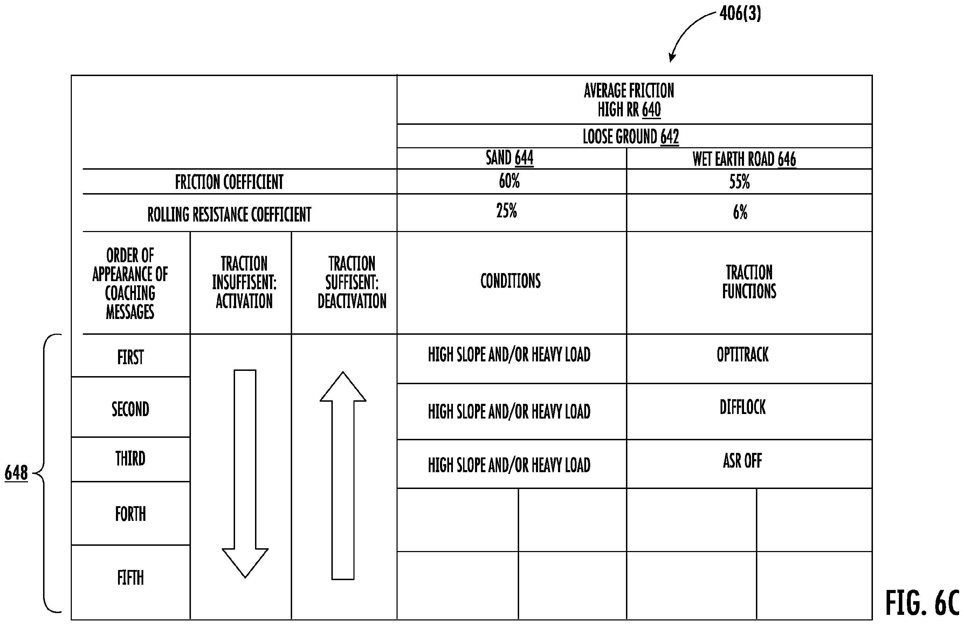

If the traction control guidance system **126** determines the hard ground traction control setting profile **602** is not determined to be the best fit of the friction data **402** to a traction control setting profile **406,** the traction control guidance system **126** will use a different traction control setting profile **406** to provide the guided traction control setting recommendation **408** to the user/driver, including the traction control setting profile **406** in **FIGS. 6B** and **6C.**

With continued reference to **FIG. 6A,** the loose ground traction control setting profiles **604** include the traction control setting sub-profile as a gravel traction control setting profile **614.** In this example, the gravel traction control setting sub-profile **614** in this example corresponds to a 60% friction coefficient and a 2% rolling resistance coefficient. As another example, the gravel traction control setting sub-profile **614** could corresponds to a 55%-65% friction coefficient and a <=3% rolling resistance coefficient. If the traction control guidance system **126** determines that the friction coefficient and rolling resistance coefficient of the loose ground traction control setting profile **604** best corresponds to the friction data **402,** the traction control guidance system **126** can use the traction control settings **612** corresponding to the loose ground traction control setting profile **604** to provide the guided traction control setting recommendation **408** to the display **200** to be presented to the user/driver. The first traction control setting for the loose ground traction control setting profile **604** is muddy site. The second traction control setting for the loose ground traction control setting profile **604** is optitrack. The third traction control setting for the loose ground traction control setting profile **604** is differential lock. The fourth traction control setting for the loose ground traction control setting profile **604** is offroad mode. The fifth traction control setting for the loose ground traction control setting profile **604** is ASR off.

For the first instance of a determined fit between the friction data **402** and the loose ground traction control setting profile **604**, the traction control guidance system **126** will generate the first traction control setting in **FIG. 6A** (muddy site) as the guided traction control setting recommendation **408** to the display **200** to be presented to the user/driver. The traction control guidance system **126** will continue to receive the vehicle data **404** and determine the friction data **402** based on the received vehicle data **404**. If the traction control guidance system **126** determines that its friction data **402** still indicates an insufficient traction for the vehicle **100,** and the loose ground traction control setting profile **604** is still determined to be the best fit of the friction data **402** to a traction control setting profile **406**, the traction control guidance system **126** will then generate the second traction control setting in **FIG. 6A** (optitrack) as the guided traction control setting recommendation **408** to the display **200** to be presented to the user/driver as an additional traction control that will increase traction for the vehicle **100,** if the user/driver had selected the first traction control setting. If the traction control guidance system **126** determines that its friction data **402** still indicates an insufficient traction for the vehicle **100,** and the loose ground traction control setting profile **604** is still determined to be the best fit of the friction data **402** to a traction control setting profile **406**, the traction control guidance system **126** will then generate the third traction control setting in **FIG. 6A** (differential lock) as the guided traction control setting recommendation **408** to the display **200** to be presented to the user/driver as an additional traction control that will increase traction for the vehicle **100,** if the user/driver had selected the second traction control setting.

If the traction control guidance system **126** determines that its friction data **402** still indicates an insufficient traction for the vehicle **100,** and the loose ground traction control setting profile **604** is still determined to be the best fit of the friction data **402** to a traction control setting profile **406**, the traction control guidance system **126** will then generate the fourth traction control setting in **FIG. 6A** (offroad mode) as the guided traction control setting recommendation **408** to the display **200** to be presented to the user/driver as an additional traction control that will increase traction for the vehicle **100,** if the user/driver had selected the third traction control setting. If the traction control guidance system **126** determines that its friction data **402** still indicates an insufficient traction for the vehicle **100,** and the loose ground traction control setting profile **604** is still determined to be the best fit of the friction data **402** to a traction control setting profile **406**, the traction control guidance system **126** will then generate the fifth traction control setting in **FIG. 6A** (ASR off) as the guided traction control setting recommendation **408** to the display **200** to be presented to the user/driver as an additional traction control that will increase traction for the vehicle **100,** if the user/driver had selected the fourth traction control setting.

If at any time, the traction control guidance system **126** determines that its friction data **402** indicates a sufficient traction for the vehicle **100,** and the loose ground traction control setting profile **604** is still determined to be the best fit of the friction data **402** to a traction control setting profile **406,** the traction control guidance system **126** will then reduce the traction control setting to the next lower traction control setting **612** as the guided traction control setting recommendation **408** to the display **200** to be presented to the user/driver as an reduced traction control that will decrease traction for the vehicle **100.** This process continues in a repeated manner.

**FIG. 6B** is a diagram illustrating an exemplary low friction and low rolling resistance traction control setting profile **620** as another traction control setting profile **406(2)** that can used by the traction control guidance system **126** in **FIG. 3** to determine guided traction control settings based on friction data, such as the friction data **402** in **FIG. 4.** The low friction and low rolling resistance traction control setting profile **620** in **FIG. 6B** in this example for when the vehicle **100** is determined by the traction control guidance system **126** to be experiencing low friction and lower rolling resistance conditions, based on the received friction data **402.** If for example, the traction control guidance system **126** determines the friction data **402** best matches the low friction and low rolling resistance traction control setting profile **620** in **FIG. 6B,** as discussed in more detail below, the traction control guidance system **126** uses the traction control settings in the low friction and low rolling resistance traction control setting profile **620** to generate the guided traction control setting recommendation **408** to the user/driver.

In this regard, with reference to **FIG. 6B,** the low friction and low rolling resistance conditions traction control setting profile **620** includes a hard ground traction control setting profile **622** and a loose ground traction control setting profile **624.** The hard ground traction control setting profile **622** and a loose ground traction control setting profile **624** for the low friction and low rolling resistance conditions traction control setting profile **620** are based on the friction coefficient and rolling resistance coefficient calculated as friction data **402** by the traction control guidance system **126** based on the vehicle data **404** in **FIG. 4** in this example. The hard ground traction control setting profile **622** in this example includes an ice traction control setting sub-profile **626** that corresponds to a 10% friction coefficient and a 1% rolling resistance coefficient. In another example, the hard ground traction control setting profile **622** could correspond to a <=15% friction coefficient and a <=2% rolling resistance coefficient. If the traction control guidance system **126** determines that the friction coefficient and rolling resistance coefficient of the hard ground traction control setting profiles **622** best corresponds to the friction data **402,** the traction control guidance system **126** can use the traction control settings **628** corresponding to the hard ground traction control setting profile **622** to provide the guided traction control setting recommendation **408** to the display **200** to be presented to the user/driver.

With continuing reference to **FIG. 6B,** the first traction control setting for the hard ground traction control setting profile **622** is axle load optimization. The second traction control setting for the hard ground traction control setting profile **622** is optitrack. The third traction control setting for the hard ground traction control setting profile **622** is differential lock. For the first instance of a determined fit between the friction data **402** and the hard ground traction control setting profile **622**, the traction control guidance system **126** will generate the first traction control setting in **FIG. 6B** (axle load optimization) as the guided traction control setting recommendation **408** to the display **200** to be presented to the user/driver. The traction control guidance system **126** will continue to receive the vehicle data **404** and determine the friction data **402** based on the received vehicle data **404.** If the traction control guidance system **126** determines that its friction data **402** still indicates an insufficient traction for the vehicle **100,** and the hard ground traction control setting profile **622** is still determined to be the best fit of the friction data **402** to a traction control setting profile **406**, the traction control guidance system **126** will then generate the second traction control setting in **FIG. 6B** (optitrack) as the guided traction control setting recommendation **408** to the display **200** to be presented to the user/driver as an additional traction control that will increase traction for the vehicle **100** if the user/driver had selected the first traction control setting. If the traction control guidance system **126** determines that its friction data **402** still indicates an insufficient traction for the vehicle **100,** and the hard ground traction control setting profile **622** is still determined to be the best fit of the friction data **402** to a traction control setting profile **406**, the traction control guidance system **126** will then generate the third traction control setting in **FIG. 6B** (differential lock) as the guided traction control setting recommendation **408** to the display **200** to be presented to the user/driver as an additional traction control that will increase traction for the vehicle **100,** if the user/driver had selected the second traction control setting If at any time, the traction control guidance system **126** determines that its friction data **402** indicates a sufficient traction for the vehicle **100,** and the hard ground traction control setting profile **622** is still determined to be the best fit of the friction data **402** to a traction control setting profile **406,** the traction control guidance system **126** will then reduce the traction control setting to the next lower traction control setting **628** as the guided traction control setting recommendation **408** to the display **200** to be presented to the user/driver as an reduced traction control that will decrease traction for the vehicle **100.** This process continues in a repeated manner.

If the traction control guidance system **126** determines the hard ground traction control setting profile **622** is not determined to be the best fit of the friction data **402** to a traction control setting profile **406,** the traction control guidance system **126** will use a different traction control setting profile **406** to provided the guided traction control setting recommendation **408** to the user/driver, including the traction control setting profile **406** in **FIGS. 6A** and **6C.**

With continued reference to **FIG. 6B,** the loose ground traction control setting profile **624** includes the traction control setting sub-profile as a hard-packed snow traction control setting sub-profile **630.** In this example, the hard-packed snow profile **630** corresponds to a 20% friction coefficient and a 1% rolling resistance coefficient. In another example, the hard-packed snow profile **630** could corresponds to a 15%-30% friction coefficient and a <=2% rolling resistance coefficient. If the traction control guidance system **126** determines that the friction coefficient and rolling resistance coefficient of the loose ground traction control setting profile **624** best corresponds to the friction data **402**, the traction control guidance system **126** can use the traction control settings **628** corresponding to the loose ground traction control setting profile **624** to provide the guided traction control setting recommendation **408** to the display **200** to be presented to the user/driver. The first traction control setting for the loose ground traction control setting profile **624** is axle load optimization. The second traction control setting for the loose ground traction control setting profile **624** is optitrack. The third traction control setting for the loose ground traction control setting profile **624** is differential lock. The fourth traction control setting for the loose ground traction control setting profile **624** is ASR off.

For the first instance of a determined fit between the friction data **402** and the loose ground traction control setting profile **624,** the traction control guidance system **126** will generate the first traction control setting in **FIG. 6B** (axle load optimization) as the guided traction control setting recommendation **408** to the display **200** to be presented to the user/driver. The traction control guidance system **126** will continue to receive the vehicle data **404** and determine the friction data **402** based on the received vehicle data **404.** If the traction control guidance system **126** determines that its friction data **402** still indicates an insufficient traction for the vehicle **100,** and the loose ground traction control setting profile **624** is still determined to be the best fit of the friction data **402** to a traction control setting profile **406,** the traction control guidance system **126** will then generate the second traction control setting in **FIG. 6B** (optitrack) as the guided traction control setting recommendation **408** to the display **200** to be presented to the user/driver as an additional traction control that will increase traction for the vehicle **100,** if the user/driver had selected the first traction control setting. If the traction control guidance system **126** determines that its friction data **402** still indicates an insufficient traction for the vehicle **100,** and the loose ground traction control setting profile **624** is still determined to be the best fit of the friction data **402** to a traction control setting profile **406,** the traction control guidance system **126** will then generate the third traction control setting in **FIG. 6B** (differential lock) as the guided traction control setting recommendation **408** to the display **200** to be presented to the user/driver as an additional traction control that will increase traction for the vehicle **100,** if the user/driver had selected the second traction control setting. If the traction control guidance system **126** determines that its friction data **402** still indicates an insufficient traction for the vehicle **100,** and the loose ground traction control setting profile **624** is still determined to be the best fit of the friction data **402** to a traction control setting profile **406,** the traction control guidance system **126** will then generate the fourth traction control setting in **FIG. 6B** (ASR off) as the guided traction control setting recommendation **408** to the display **200** to be presented to the user/driver as an additional traction control that will increase traction for the vehicle **100,** if the user/driver had selected the third traction control setting.

If at any time, the traction control guidance system **126** determines that its friction data **402** indicates a sufficient traction for the vehicle **100,** and the loose ground traction control setting profile **624** is still determined to be the best fit of the friction data **402** to a traction control setting profile **406,** the traction control guidance system **126** will then reduce the traction control setting to the next lower traction control setting **628** as the guided traction control setting recommendation **408** to the display **200** to be presented to the user/driver as an reduced traction control that will decrease traction for the vehicle **100.** This process continues in a repeated manner.

**FIG. 6C** is a diagram illustrating an exemplary average friction and high rolling resistance traction control setting profile **640** as another traction control setting profile **406(3)** that can used by the traction control guidance system **126** in **FIG. 3** to determine guided traction control settings based on friction data, such as the friction data **402** in **FIG. 4.** The average friction and high rolling resistance traction control setting profile **640** in **FIG. 6C** in this example for when the vehicle **100** is determined by the traction control guidance system **126** to be experiencing average friction and higher rolling resistance conditions, based on the received friction data **402.** If for example, the traction control guidance system **126** determines the friction data **402** best matches the average friction and high rolling resistance traction control setting profile **640** in **FIG. 6C,** as discussed in more detail below, the traction control guidance system **126** uses the traction control settings in the average friction and high rolling resistance traction control setting profile **640** to generate the guided traction control setting recommendation **408** to the user/driver.

In this regard, with reference to **FIG. 6C,** the average friction and high rolling resistance conditions traction control setting profile **640** includes a loose ground traction control setting profile **642.** The loose ground traction control setting profile **642** for the average friction and high rolling resistance conditions traction control setting profile **640** is based on the friction coefficient and rolling resistance coefficient calculated as friction data **402** by the traction control guidance system **126** based on the vehicle data **404** in **FIG. 4** in this example. In this example, the loose ground traction control setting profile **642** includes a sand traction control setting sub-profile **644** that corresponds to a 60% friction coefficient and a 25% rolling resistance coefficient, and a wet earth road traction control setting sub-profile **646** that corresponds to a 55% friction coefficient and a 6% rolling resistance coefficient. In another example, the loose ground traction control setting profile **642** could correspond to a >=50% friction coefficient and a >=10% rolling resistance coefficient. In yet another example, the loose ground traction control setting profile **642** could correspond to a <=60% friction coefficient and a 4%-10% rolling resistance coefficient. If the traction control guidance system **126** determines that the friction coefficient and rolling resistance coefficient of the loose ground traction control setting profiles **642** best corresponds to the friction data **402,** the traction control guidance system **126** can use the traction control settings **648** corresponding to the loose ground traction control setting profile **642** to provide the guided traction control setting recommendation **408** to the display **200** to be presented to the user/driver.

With continuing reference to **FIG. 6C,** the first traction control setting for the sand traction control setting sub-profile **644** of the loose ground traction control setting profile **642** is high slope and/or heavy load. The second traction control setting for the sand traction control setting sub-profile **644** of the loose ground traction control setting profile **642** is high slope and/or heavy load. The third traction control setting for the sand traction control setting sub-profile **644** of the loose ground traction control setting profile **642** is. For the first instance of a determined fit between the friction data **402** and the sand traction control setting sub-profile **644,** the traction control guidance system **126** will generate the first traction control setting shown in **FIG. 6C** (optitrack) as the guided traction control setting recommendation **408** to the display **200** to be presented to the user/driver. The traction control guidance system **126** will continue to receive the vehicle data **404** and determine the friction data **402** based on the received vehicle data **404.** If the traction control guidance system **126** determines that its friction data **402** still indicates an insufficient traction for the vehicle **100,** and the sand traction control setting sub-profile **644** is still determined to be the best fit of the friction data **402** to a traction control setting profile **406,** the traction control guidance system **126** will then generate the second traction control setting in **FIG. 6C** (differential lock) as the guided traction control setting recommendation **408** to the display **200** to be presented to the user/driver as an additional traction control that will increase traction for the vehicle **100** if the user/driver had selected the first traction control setting. If the traction control guidance system **126** determines that its friction data **402** still indicates an insufficient traction for the vehicle **100,** and the sand traction control setting sub-profile **644** is still determined to be the best fit of the friction data **402** to a traction control setting profile **406,** the traction control guidance system **126** will then generate the third traction control setting in **FIG. 6C** (ASR off) as the guided traction control setting recommendation **408** to the display **200** to be presented to the user/driver as an additional traction control that will increase traction for the vehicle **100,** if the user/driver had selected the second traction control setting. If at any time, the traction control guidance system **126** determines that its friction data **402** indicates a sufficient traction for the vehicle **100,** and the sand traction control setting sub-profile **644** is still determined to be the best fit of the friction data **402** to a traction control setting profile **406,** the traction control guidance system **126** will then reduce the traction control setting to the next lower traction control setting **648** as the guided traction control setting recommendation **408** to the display **200** to be presented to the user/driver as an reduced traction control that will decrease traction for the vehicle **100.** This process continues in a repeated manner.

If the traction control guidance system **126** determines the loose ground traction control setting profile **642** is not determined to be the best fit of the friction data **402** to a traction control setting profile **406,** the traction control guidance system **126** will use a different traction control setting profile **406** to provided the guided traction control setting recommendation **408** to the user/driver, including the traction control setting profile **406** in **FIGS. 6A** and **6B.**

With continued reference to **FIG. 6C,** the loose ground traction control setting profile **642** also includes the wet earth road traction control setting sub-profile **646.** In this example, the wet earth road traction control setting sub-profile **646** corresponds to a 55% friction coefficient and a 6% rolling resistance coefficient. If the traction control guidance system **126** determines that the friction coefficient and rolling resistance coefficient of the wet earth road traction control setting sub-profile **646** best corresponds to the friction data **402,** the traction control guidance system **126** can use the traction control settings **648** corresponding to the wet earth road traction control setting sub-profile **646** to provide the guided traction control setting recommendation **408** to the display **200** to be presented to the user/driver. The first traction control setting for the wet earth road traction control setting sub-profile **646** is optitrack. The second traction control setting for the wet earth road traction control setting sub-profile **646** is differential lock. The third traction control setting for the wet earth road traction control setting sub-profile **646** is ASR off.

For the first instance of a determined fit between the friction data **402** and the wet earth road traction control setting sub-profile **646,** the traction control guidance system **126** will generate the first traction control setting in **FIG. 6C** (optitrack) as the guided traction control setting recommendation **408** to the display **200** to be presented to the user/driver. The traction control guidance system **126** will continue to receive the vehicle data **404** and determine the friction data **402** based on the received vehicle data **404.** If the traction control guidance system **126** determines that its friction data **402** still indicates an insufficient traction for the vehicle **100,** and the wet earth road traction control setting sub-profile **646** is still determined to be the best fit of the friction data **402** to a traction control setting profile **406,** the traction control guidance system **126** will then generate the second traction control setting in **FIG. 6C** (differential lock) as the guided traction control setting recommendation **408** to the display **200** to be presented to the user/driver as an additional traction control that will increase traction for the vehicle **100,** if the user/driver had selected the first traction control setting. If the traction control guidance system **126** determines that its friction data **402** still indicates an insufficient traction for the vehicle **100,** and the wet earth road traction control setting sub-profile **646** is still determined to be the best fit of the friction data **402** to a traction control setting profile **406,** the traction control guidance system **126** will then generate the third traction control setting in **FIG. 6C** (ASR off) as the guided traction control setting recommendation **408** to the display **200** to be presented to the user/driver as an additional traction control that will increase traction for the vehicle **100,** if the user/driver had selected the second traction control setting.

If at any time, the traction control guidance system **126** determines that its friction data **402** indicates a sufficient traction for the vehicle **100,** and the wet earth road traction control setting sub-profile **646** is still determined to be the best fit of the friction data **402** to a traction control setting profile **406,** the traction control guidance system **126** will then reduce the traction control setting to the next lower traction control setting **648** as the guided traction control setting recommendation **408** to the display **200** to be presented to the user/driver as an reduced traction control that will decrease traction for the vehicle **100.** This process continues in a repeated manner.

Note that any of the percentages of the friction coefficient and/or rolling resistance coefficient can be changed for any of the traction control setting profiles in **FIGS. 6A-6C** can be programmed, altered, changed, or updated through programming. Also note that any of the traction control settings **612, 628, 648** for any of the traction control setting profiles in **FIGS. 6A-6C** can be programmed, altered, changed, or updated through programming.

As previously discussed, the traction control guidance system **126** can also be configured to provide a visual indication of the components of the vehicle **100** that are involved or engaged in any of the traction control settings activated in the GUI **202** displayed on the display **200** in **FIG.** 2. This provides another convenient method to display to a user/driver which components of the vehicle **100** are involved in providing traction control under control of the TCS **102,** based on the traction control setting(s) activated by the user/driver through the GUI **202.** As discussed above, the user/driver can select whatever traction control settings are desired to activate or de-activate through the GUI **202.** These traction control settings can be accepted by the user/driver from guided traction control settings provided by traction control guidance system **126** as recommendations on the GUI **202** displayed on the display **200** to the user/driver.

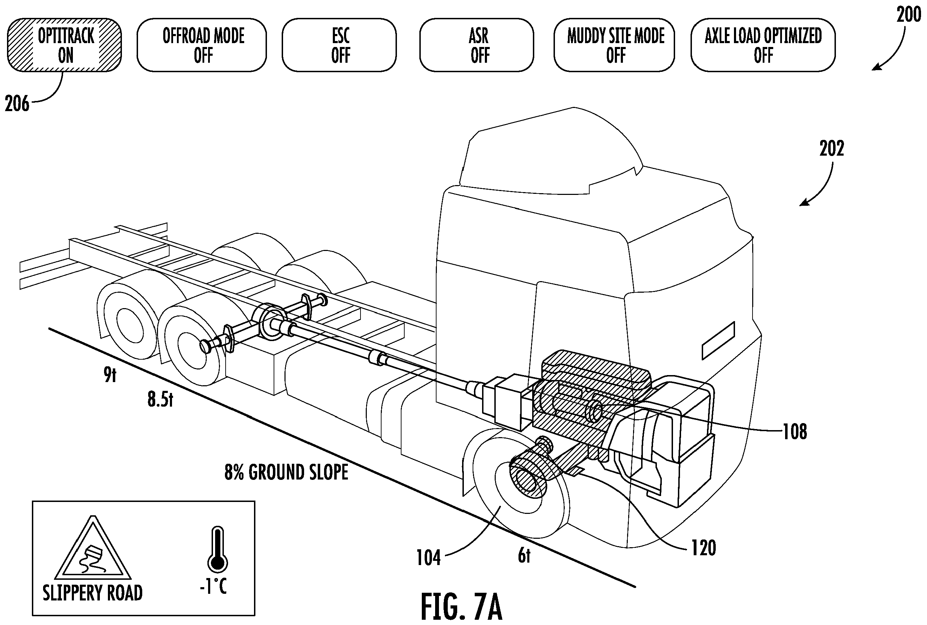

For example, **FIG. 7A** shows the GUI **202** generated by the traction control guidance system **126** in **FIG. 3** and displayed on the display **200** in **FIG. 2** to visually indicate the optitrack traction control setting is activated as a traction control setting. The optitrack visual traction control button **206** is generated by the traction control guidance system **126** to indicate textual status as ON as well as being highlighted to show its activation. In addition, the engine **108,** the front axle **120,** and the front tires **124** are highlighted in the GUI **202** by the traction control guidance system **126** to visually indicate to the user/driver that these vehicle components are involved in providing the optitrack traction control.

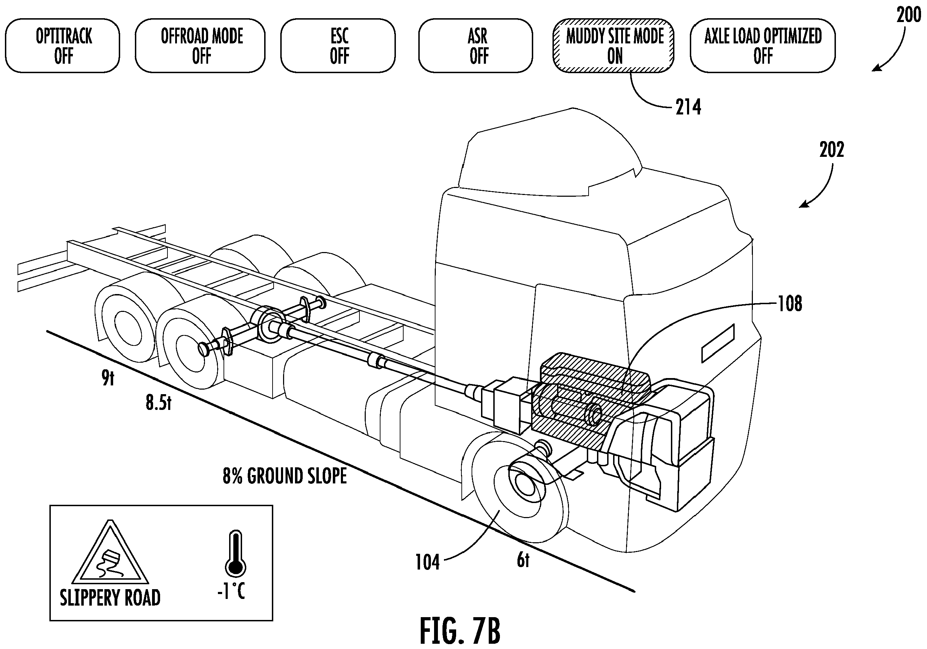

As another example, **FIG. 7B** shows the GUI **202** generated by the traction control guidance system **126** in **FIG. 3** and displayed on the display **200** in **FIG. 2** to visually indicate the muddy site traction control setting activated as a traction control setting. The muddy site visual traction control button **214** is generated by the traction control guidance system **126** to indicate textual status as ON as well as being highlighted to show its activation. In addition, the engine **108** is highlighted in the GUI **202** by the traction control guidance system **126** to visually indicate to the user/driver that this vehicle component is involved in providing the muddy site traction control.

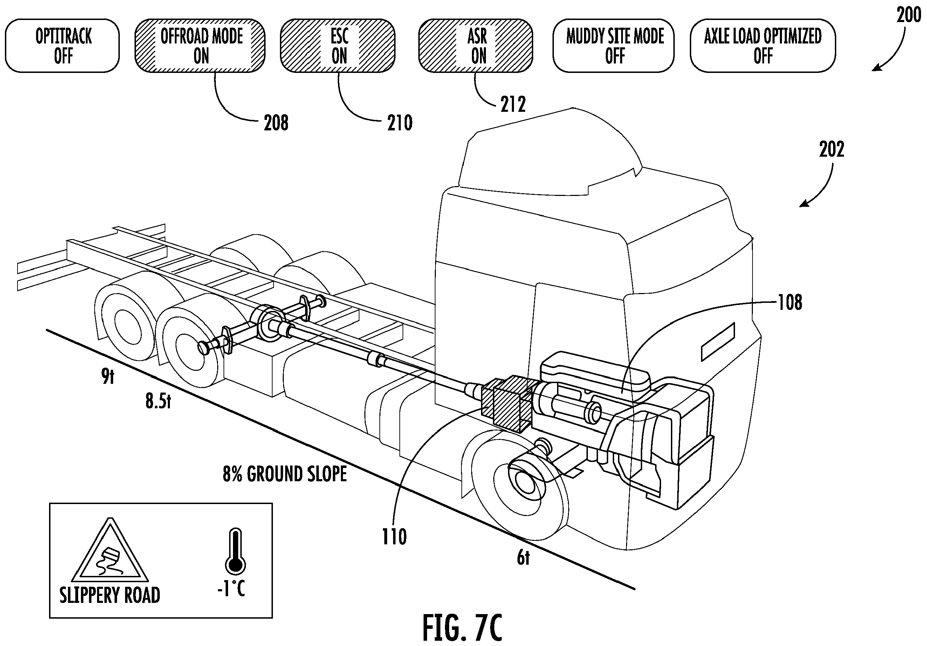

As another example, **FIG. 7C** shows the GUI **202** generated by the traction control guidance system **126** in **FIG. 3** and displayed on the display **200** in **FIG. 2** to visually indicate the offroad mode traction control setting is activated as traction control setting. The offroad mode visual traction control button **208** is generated by the traction control guidance system **126** to indicate textual status as ON as well as being highlighted to show its activation. In addition, the gearbox **110** is highlighted in the GUI **202** by the traction control guidance system **126** to visually indicate to the user/driver that this vehicle component is involved in providing the offroad mode traction control.

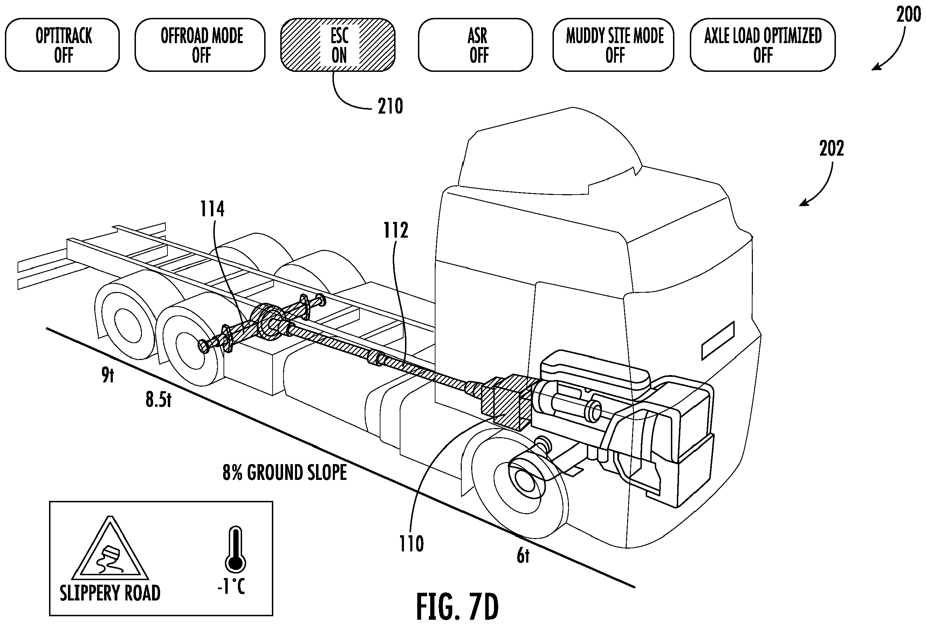

As another example, **FIG. 7D** shows the GUI **202** generated by the traction control guidance system **126** in **FIG. 3** and displayed on the display **200** in **FIG. 2** to visually indicate the ASR traction control setting is activated as traction control setting. The ASR visual traction control button **212** is generated by the traction control guidance system **126** to indicate textual status as OFF.

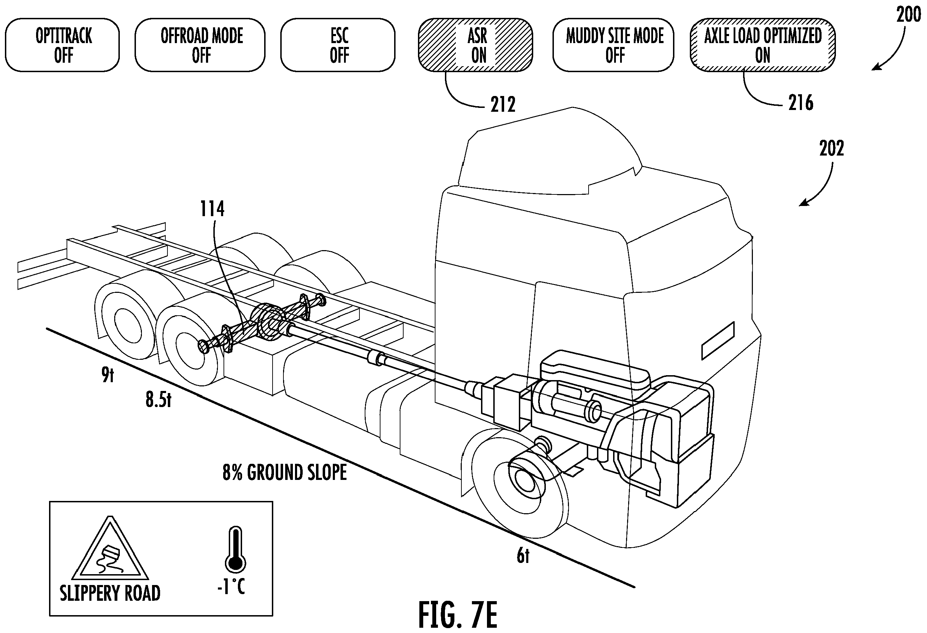

As another example, **FIG. 7E** shows the GUI **202** generated by the traction control guidance system **126** in **FIG. 3** and displayed on the display **200** in **FIG. 2** to visually indicate the axle load optimization traction control setting is activated as traction control setting. The axle load optimization visual traction control button **216** is generated by the traction control guidance system **126** to indicate textual status as ON as well as being highlighted to show its activation. In addition, the rear axle **114** is highlighted in the GUI **202** by the traction control guidance system **126** to visually indicate to the user/driver that these vehicle components are involved in providing the axle load optimization traction control.

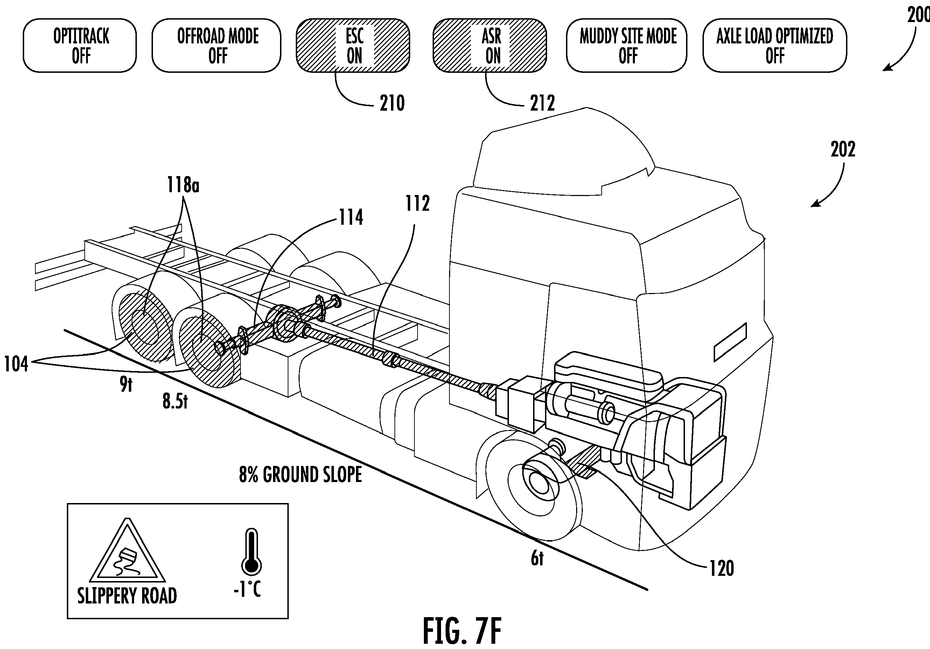

As another example, **FIG. 7F** shows the GUI **202** generated by the traction control guidance system **126** in **FIG. 3** and displayed on the display **200** in **FIG. 2** to visually indicate the differential lock control setting is activated as traction control setting. The differential lock is visually shown by the ESC visual traction control button **210** and the ASR visual traction control button **212** generated by the traction control guidance system **126** to indicate textual statuses as ON as well as being highlighted to show its activation. In addition, the front axle **120,** the drive shaft **112,** the rear axle **114,** the wheels **118,** and rear tires **104** are highlighted in the GUI **202** by the traction control guidance system **126** to visually indicate to the user/driver that these vehicle components are involved in providing the offroad mode traction control.

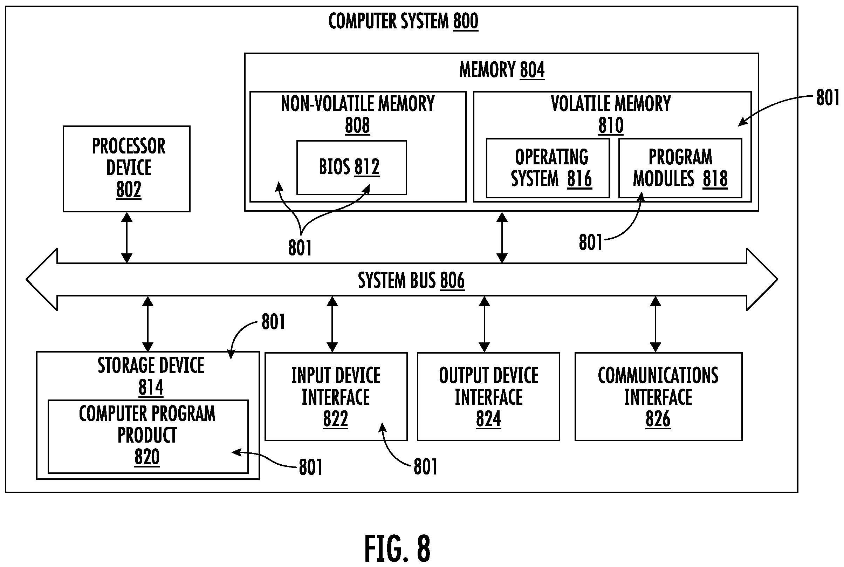

**FIG. 8** is a schematic diagram of a computer system **800** for implementing examples disclosed herein, including the traction control guidance system **126.** The computer system **800** may also be used for implementing the TCS **102** and/or the display **200.** The computer system **800** is adapted to execute instructions from a computer-readable medium to perform these and/or any of the functions or processing described herein. The computer system **800** may be connected (e.g., networked) to other machines in a LAN, an intranet, an extranet, or the Internet. While only a single device is illustrated, the computer system **800** may include any collection of devices that individually or jointly execute a set (or multiple sets) of instructions to perform any one or more of the methodologies discussed herein.

The computer system **800** may comprise any computing or electronic device capable of including firmware, hardware, and/or executing programming instructions **801** (e.g., software instructions, firmware instructions) to implement the functionality described herein. The programming instructions **801** can be stored as non-transitory programming instructions on computer-readable medium. The computer system **800** includes a processor device **802** (may also be referred to as a control unit), a memory **804,** and a system bus **806.** The system bus **806** provides an interface for system components including, but not limited to, the memory **804** and the processor device **802.** The processor device **802** may include any number of hardware components for conducting data or signal processing or for executing computer code, including the programming instructions **801,** stored in memory **804.** The processor device **802** (i.e., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processor device **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with a processor device **802**. The programming instructions **801** can be stored in non-volatile memory **808** and/or volatile memory **810**. A basic input/output system (BIOS) **812** may be stored in the non-volatile memory **808** and can include the basic routines that help to transfer information between elements within the computer system **800**. The programming instructions **801** can be stored in the BIOS **812**.

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like. The programming instructions **801** can be stored in storage device **814.**

A number of modules can be stored in the storage device **814** and in the volatile memory **810,** including an operating system **816** and one or more program modules **818,** which may implement the functionality described herein in whole or in part. All or a portion of the examples disclosed herein may be implemented as a computer program product **820** (which includes the programming instructions **801)** stored on a transitory or non-transitory computer-usable or computer-readable storage medium (i.e., single medium or multiple media), such as the storage device **814,** which includes complex programming instructions, such as complex computer-readable program code, to cause the processor device **802** to carry out the steps described herein. Thus, the computer-readable program code can comprise software instructions for implementing the functionality of the examples described herein when executed by the processor device **802**. The processor device **802** may serve as a controller, or control system, for the computer system **800** that is to implement the functionality described herein.

The computer system **800** also may include an input device interface **822** (e.g., input device interface and/or output device interface). The input device interface **822** may be configured to receive input (including the programming instruction **801)** and selections to be communicated to the computer system **800** when executing instructions, such as from a keyboard, mouse, touch-sensitive surface, etc. Such input devices may be connected to the processor device **802** through the input device interface **822** coupled to the system bus **806** but can be connected through other interfaces such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may also include a communications interface **826** suitable for communicating with a network as appropriate or desired.

The operational steps described in any of the exemplary embodiments herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

It is to be understood that the present invention is not limited to the embodiments described above and illustrated in the drawings; rather, the skilled person will recognize that many changes and modifications may be made within the scope of the present disclosure and appended claims.

Implementation examples are also described in the following numbered clauses:

    1. A method, comprising:

receiving, by a processor of at least one computing device, friction data relating to at least one friction condition experienced by a vehicle; comparing, by the processor, the received friction data to at least one traction control setting profile each comprising one or more traction control settings; determining, by the processor, a recommended traction control setting profile of the at least one traction control setting profile corresponding to the received friction data; and communicating, by the processor, a recommended at least one traction control setting of the one or more traction control settings for the recommended traction control setting profile to a display, to be displayed.

2. The method according to clause 1, wherein the friction data comprises a rolling resistance of the vehicle.

3. The method according to clause 2, wherein the rolling resistance of the vehicle is based on at least one of amount of deformation of a wheel of the vehicle, an amount of deformation of a road surface, and an amount movement below the road surface.

4. The method according to any of clauses 1-3, wherein the friction data comprises a friction coefficient relating to friction of the vehicle.

5. The method according to any of clauses 1-4, wherein the friction data comprises a type of ground that the vehicle is disposed on.

6. The method according to any of clauses 1-5, further comprising:

receiving, by the processor, an activation selection of the recommended at least one traction control setting; and causing, by the processor, the activation selection of the recommended at least one traction control setting to be activated as a traction control setting for the vehicle.

7. The method according to any of clause 6, further comprising:

communicating, by the processor, an activation status of the selected recommended at least one traction control setting to the display to be displayed; and communicating, by the processor, an activation status for the selected recommended at least one traction control settings to the display to be displayed as a visual indicator on at least one traction control button on a graphical user interface (GUI) displayed on the display.

8. The method according to any of clauses 6-7, further comprising:

receiving, by the processor, a deactivation selection of the recommended at least one traction control setting; and causing, by the processor, the deactivation selection of the recommended at least one traction control setting to be deactivated as a traction control setting for the vehicle.

9. The method according to clause 8, further comprising:

communicating, by the processor, a deactivation status of the deactivated selection of the at least one traction control setting to the display to be displayed; and communicating, by the processor, a deactivation status for the deactivated selection of the at least one traction control settings to the display to be displayed, as a visual indicator on at least one traction control button on a graphical user interface (GUI) displayed on the display.

10. The method according to any of clauses 6-9, further comprising:

receiving, by the processor, an activation selection of a second traction control setting not included in the recommended at least one traction control setting; and causing, by the processor, the second traction control setting selected to be activated as a traction control setting for the vehicle; communicating, by the processor, an activation status of the second one traction control setting to the display to be displayed; and communicating, by the processor, an activation status of the second traction control setting to the display to be displayed, as a visual indicator on a traction control button on a graphical user interface (GUI) displayed on the display.

11. The method according to any of clauses 1-10, comprising:

comparing, by the processor, the received friction data to a plurality of traction control setting profiles each comprising one or more traction control settings; and determining, by the processor, the recommended traction control setting profile of the plurality of traction control setting profile corresponding to the received friction data based on the best fit of the friction data to a traction control setting profile of the plurality of traction control settings.

12. The method according to clause 11, further comprising:

receiving, by the processor, second friction data relating to at least one friction condition experienced by the vehicle;
comparing, by the processor, the received second friction data to the plurality of traction control setting profiles; and
determining, by the processor, if the second friction data has a better fit to a different traction control setting profile of the plurality of traction control setting profiles than the recommended traction control setting profile; and
in response to the processor determining the second friction data has a better fit to a different traction control setting profile than the recommended traction control setting profile, communicating, by the processor, a second recommended at least one traction control setting of the one or more traction control settings for the different traction control setting profile to the display, to be displayed.

13. The method according to any of clauses 1-12, further comprising:

receiving, by the processor, second friction data relating to at least one friction condition experienced by the vehicle;
determining, by the processor, if the second friction data indicates a sufficient traction for the vehicle; and
in response to determining the second friction data indicates an insufficient traction for the vehicle, communicating, by the processor, a second recommended traction control setting of the recommended traction control setting profile to the display, to be displayed.

14. The method according to clause 13, further comprising:

receiving, by the processor, an activation selection of the second recommended traction control setting; and
causing, by the processor, the second recommended traction control setting selected to be activated as a second traction control setting for the vehicle.

15. The method according to any of clauses 13-14, further comprising:

receiving, by the processor, second friction data relating to at least one friction condition experienced by the vehicle;
determining, by the processor, if the second friction data indicates a sufficient traction for the vehicle; and
in response to determining the second friction data indicates a sufficient traction for the vehicle, communicating, by the processor, the recommended at least one traction control setting to be deactivated to the display, to be displayed.

16. The method according to clause 15, further comprising:

receiving, by the processor, a deactivation selection of the recommended at least one traction control setting; and
causing, by the processor, the recommended at least one traction control setting selected to be deactivated as a traction control setting for the vehicle.

17. The method according to any of clauses 1-16, wherein the at least one traction control setting comprises a plurality of traction control settings comprising optitrack, muddy site, offroad mode, anti-slip regulation (ASR) off, axle load optimization, and differential lock.

18. The method according to any of clauses 1-17, wherein:

the at least one traction control setting profile comprises a hard ground traction control setting profile comprising at least one of (1) a $\geq$ 75% friction coefficient and a $\leq$ 2% rolling resistance coefficient; (2) a $\geq$ 62% friction coefficient and a 3-6% rolling resistance coefficient; and (3) a 30%-55% friction coefficient and a $\leq$ 2% rolling resistance coefficient, and at least one hard ground traction control setting comprised from the group consisting of offroad mode, optitrack, and differential lock; and
comprising:

determining, by the processor, a recommended traction control setting profile of the hard ground traction control setting profile corresponding to the received friction data; and
communicating, by the processor, the at least one hard ground traction control setting as the recommended traction control setting profile to the display, to be displayed.

19. The method according to any of clauses 1-17, wherein:

the at least one traction control setting profile comprises a hard ground traction control setting profile comprising a 55%-65% friction coefficient and a ≤ 3% rolling resistance coefficient; and at least one loose ground traction control setting comprised from the group consisting of muddy site, optitrack, differential lock, offroad mode, and anti-slip regulation (ASR) off; and comprising:

determining, by the processor, a recommended traction control setting profile of the loose ground traction control setting profile corresponding to the received friction data; and communicating, by the processor, the at least one loose ground traction control setting as the recommended traction control setting profile to the display, to be displayed.

20. The method according to any of clauses 1-17, wherein:

the at least one traction control setting profile comprises at least one hard ground traction control setting profile comprising a ≤ 15% friction coefficient and a ≤ 2% rolling resistance coefficient; and at least one loose ground traction control setting comprised from the group consisting of axles load optimization, optitrack, and differential lock; and comprising:

determining, by the processor, a recommended traction control setting profile of the hard ground traction control setting profile corresponding to the received friction data; and communicating, by the processor, the at least one hard ground traction control setting as the recommended traction control setting profile to the display, to be displayed.

21. The method according to any of clauses 1-17, wherein:

the at least one traction control setting profile comprises a hard ground traction control setting profile comprising a 15%-30]% friction coefficient and a ≤ 2% rolling resistance coefficient; and at least one loose ground traction control setting comprised from the group consisting of axles load optimization, optitrack, differential lock, and anti-slip regulation (ASR) off; and comprising:

determining, by the processor, a recommended traction control setting profile of the loose ground traction control setting profile corresponding to the received friction data; and communicating, by the processor, the at least one loose ground traction control setting as the recommended traction control setting profile to the display, to be displayed.

22. The method according to any of clauses 1-17, wherein:

the at least one traction control setting profile comprises a hard ground traction control setting profile comprising at least one of (1) ≥ 50% friction coefficient and a ≥ 10% rolling resistance coefficient, and (2) < 60% friction coefficient and a 4%-10]% rolling resistance coefficient; and at least one loose ground traction control setting comprised from the group consisting of optitrack, differential lock, and anti-slip regulation (ASR) off; and comprising:

determining, by the processor, a recommended traction control setting profile of the loose ground traction control setting profile corresponding to the received friction data; and communicating, by the processor, the at least one loose ground traction control setting as the recommended traction control setting profile to the display, to be displayed.

23. A vehicle comprising a processor device configured to perform the method of clause 1.

24. A computer system, comprising:
at least one computing device comprising a processor device configured to:

receive friction data relating to at least one friction condition experienced by a vehicle; compare the received friction data to at least one traction control setting profile each comprising one or more traction control settings; determine a recommended traction control setting profile of the at least one traction control setting profile corresponding to the received friction data; and communicate a recommended at least one traction control setting of the one or more traction control settings for the recommended traction control setting profile to a display, to be displayed.

25. A non-transitory computer-readable storage medium comprising programming instructions, which, when executed by a processor device of a computing system, cause the processor device to:

receive friction data relating to at least one friction condition experienced by a vehicle;
compare the received friction data to at least one traction control setting profile each comprising one or more traction control settings;
determine a recommended traction control setting profile of the at least one traction control setting profile corresponding to the received friction data; and
communicate a recommended at least one traction control setting of the one or more traction control settings for the recommended traction control setting profile to a display, to be displayed.

**Claims**

1. A computer system, comprising:
at least one computing device comprising a processor device configured to:

receive friction data relating to at least one friction condition experienced by a vehicle;
compare the received friction data to at least one traction control setting profile each comprising one or more traction control settings;
determine a recommended traction control setting profile of the at least one traction control setting profile corresponding to the received friction data; and
communicate a recommended at least one traction control setting of the one or more traction control settings for the recommended traction control setting profile to a display, to be displayed.

2. The computer system of claim 1, wherein the friction data comprises a rolling resistance of the vehicle.

3. The computer system of claim 2, wherein the rolling resistance of the vehicle is based on at least one of amount of deformation of a wheel of the vehicle, an amount of deformation of a road surface, and an amount movement below the road surface.

4. The computer system of claim 1, wherein the friction data comprises a friction coefficient relating to friction of the vehicle, or wherein the friction data comprises a type of ground that the vehicle is disposed on.

5. The computer system of claim 1, wherein the processor device is further configured to:

receive an activation selection of the recommended at least one traction control setting; and
cause the activation selection of the recommended at least one traction control setting to be activated as a traction control setting for the vehicle.

6. The computer system of claim 5, wherein the processor device is further configured to:

communicate an activation status of the selected recommended at least one traction control setting to the display to be displayed; and
communicate an activation status for the selected recommended at least one traction control settings to the display to be displayed as a visual indicator on at least one traction control button on a graphical user interface (GUI) displayed on the display.

7. The computer system of claim 5, wherein the processor device is further configured to:

receive a deactivation selection of the recommended at least one traction control setting; and
cause the deactivation selection of the recommended at least one traction control setting to be deactivated as a traction control setting for the vehicle.

8. The computer system of claim 7, wherein the processor device is further configured to:

communicate a deactivation status of the deactivated selection of the at least one traction control setting to the display to be displayed; and
communicate a deactivation status for the deactivated selection of the at least one traction control settings to the display to be displayed, as a visual indicator on at least one traction control button on a graphical user interface (GUI) displayed on the display.

9. The computer system of claim 5, wherein the processor device is further configured to:

receive an activation selection of a second traction control setting not included in the recommended at least one traction control setting; and
cause the second traction control setting selected to be activated as a traction control setting for the vehicle;
communicate an activation status of the second one traction control setting to the display to be displayed; and
communicate an activation status of the second traction control setting to the display to be displayed, as a visual indicator on a traction control button on a graphical user interface (GUI) displayed on the display.

10. The computer system of claim 1, wherein the processor device is configured to:

compare the received friction data to a plurality of traction control setting profiles each comprising one or more traction control settings; and

determine the recommended traction control setting profile of the plurality of traction control setting profile corresponding to the received friction data based on the best fit of the friction data to a traction control setting profile of the plurality of traction control settings.

11. The computer system of claim 10, wherein the processor device is further configured to:

receive second friction data relating to at least one friction condition experienced by the vehicle;

compare the received second friction data to the plurality of traction control setting profiles; and

determine if the second friction data has a better fit to a different traction control setting profile of the plurality of traction control setting profiles than the recommended traction control setting profile; and

communicate a second recommended at least one traction control setting of the one or more traction control settings for the different traction control setting profile to the display to be displayed, in response to the processor determining the second friction data has a better fit to a different traction control setting profile than the recommended traction control setting profile.

12. The computer system of claim 1, wherein the processor device is further configured to:

receive second friction data relating to at least one friction condition experienced by the vehicle;

determine if the second friction data indicates a sufficient traction for the vehicle; and

communicate a second recommended traction control setting of the recommended traction control setting profile to the display to be displayed, in response to determining the second friction data indicates an insufficient traction for the vehicle, and

optionally communicate the recommended at least one traction control setting to be deactivated to the display to be displayed, in response to determining the second friction data indicates a sufficient traction for the vehicle,.

13. A method, comprising:

receiving, by a processor of at least one computing device, friction data relating to at least one friction condition experienced by a vehicle;

comparing, by the processor, the received friction data to at least one traction control setting profile each comprising one or more traction control settings;

determining, by the processor, a recommended traction control setting profile of the at least one traction control setting profile corresponding to the received friction data; and

communicating, by the processor, a recommended at least one traction control setting of the one or more traction control settings for the recommended traction control setting profile to a display, to be displayed.

14. The method of claim 13, further comprising:

receiving, by the processor, an activation selection of the recommended at least one traction control setting; and

causing, by the processor, the activation selection of the recommended at least one traction control setting to be activated as a traction control setting for the vehicle.

15. A vehicle comprising a processor device configured to perform the method of claim 13.

FIG. 1

EP 4 335 711 A1

FIG. 2

| OPTITRACK OFF | OFFROAD MODE OFF | ESC ON | ASR ON | MUDDY SITE MODE OFF | AXLE LOAD OPTIMIZED OFF |

206   208   238 210   212   214   216   200

232   234   240   202

TIP : YOU SHOULD ENGAGE OPTITRACK SYSTEM TO IMPROVE TRACTION

!

OPTITRACK ACTIVATION   NO THANKS

116   236

9t   230   228   8.5t

8% GROUND SLOPE

218

120

SLIPPERY ROAD   220   224   -1°C   226   6t

EP 4 335 711 A1

**FIG. 3**

VEHICLE CONTROL SYSTEM 300

TCGS 126

302

TCS 102

ENGINE 108

GEARBOX 110

REAR DIFFERENTIALS 114

REAR AXLE PUMPS 117

304

200

DISPLAY

GUI 202

OPTITRACK 206

MUDDY SIDE 208

OFFRAOD MODE 210

ESC 212

ASR 214

AXLE LOAD OPTIMIZATION 216

VEHICLE
DATA **404**

WHEELS SPEED
ENGINE TORQUE
ENGINE TORQUE LIMITATION
STEERING WHEEL ANGLE
AMBIENT TEMPERATURE
RAIN SENSOR/WIPER
AXELS LOAD
VEHICLE SPEED
VEHICLE LOAD
ROAD SLOPE
VEHICLE ROLL
VEHICLE CONFIGURATION
GEOLOCALISATION (I-SEE)
TRACTION FUNCTIONS STATUS
FRICTION COEF
ROLLING RESISTANCE (t-1)
TRACTION STATUS (t-1)

**406**

**126**

403

408

400

FRICTION
DATA **402**

TRACTION SUFFICIENT OR NOT
ROLLING RESISTANCE VALUE
FRICTION COEF

FIG. 4

500

FIG. 5

| | | | AVERAGE TO HIGH FRICTION LOW RR 600 | | | |
|---|---|---|---|---|---|---|
| | | | HARD GROUND 602 | | | LOOSE GROUND 604 |
| | | | DRY ASPHALT/CONCRETE | DRY EARTH ROAD | WET ASPHALT | GRAVEL |
| FRICTION COEFFICIENT | | | 80% | 68% | 55% | 60% |
| ROLLING RESISTANCE COEFFICIENT | | | 1% | 4% | 1% | 2% |
| ORDER OF APPEARANCE OF COACHING MESSAGES | TRACTION INSUFFISENT: ACTIVATION | TRACTION SUFFISENT: DEACTIVATION | CONDITIONS | TRACTION FUNCTIONS | CONDITIONS | TRACTION FUNCTIONS |
| FIRST | ↓ | ↑ | HEAVY LOAD AND HIGH SLOPE | OFFROAD MODE (ASR OFFROAD/GEARBOX) | BUMPU GROUND AND LOW VSPEED | MUDDY SITE |
| SECOND | | | HEAVY LOAD AND HIGH SLOPE AND SLIPPING AND VSPEED<30km/h | OPTITRACK | HIGH SLOPE AND/OR SLIPPING AND VSPEED<30km/h | OPTITRACK |
| THIRD | | | HEAVY LOAD AND HIGH SLOPE AND SLIPPING | DIFFLOCK | HIGH SLOPE AND/OR SLIPPING | DIFFLOCK |
| FORTH | | | | | HIGH SLOPE AND/OR SLIPPING AND/OR HEAVY LOAD | OFFROAD MODE (ASR OFF ROAD/GEARBOX OFFROAD) |
| FIFTH | | | | | ROUGH GROUND AND SLIPPING AND HEAVY LOAD | ASR OFF |

406(1)
606   608   610   614
612

**FIG. 6A**

| ORDER OF APPEARANCE OF COACHING MESSAGES | TRACTION INSUFFISENT: ACTIVATION | TRACTION SUFFISENT: DEACTIVATION | LOW FRICTION LOW RR 620 | | | |
|---|---|---|---|---|---|---|
| | | | HARD GROUND 622 | | LOOSE GROUND 624 | |
| | | | ICE | | HARD-PAKED SNOW | |
| FRICTION COEFFICIENT | | | 10% | | 20% | |
| ROLLING RESISTANCE COEFFICIENT | | | 1% | | 1% | |
| | | | CONDITIONS | TRACTION FUNCTIONS | CONDITIONS | TRACTION FUNCTIONS |
| FIRST | | | VSPEED = 0 | AXLE LOAD OPTIMISATION | VSPEED = 0 | AXLE LOAD OPTIMISATION |
| SECOND | | | VSPEED<30km/h AND SLIPPING | OPTITRACK | VSPEED<30km/h AND SLIPPING | OPTITRACK |
| THIRD | | | | DIFFLOCK | | DIFFLOCK |
| FORTH | | | | | | ASR OFF |
| FIFTH | | | | | | |

626   630   622   624   620   628

FIG. 6B

EP 4 335 711 A1

406(3)

| | | AVERAGE FRICTION HIGH RR 640 | |
| --- | --- | --- | --- |
| | | LOOSE GROUND 642 | |
| | | SAND 644 | WET EARTH ROAD 646 |
| FRICTION COEFFICIENT | | 60% | 55% |
| ROLLING RESISTANCE COEFFICIENT | | 25% | 6% |
| ORDER OF APPEARANCE OF COACHING MESSAGES | TRACTION INSUFFISENT: ACTIVATION | CONDITIONS | TRACTION FUNCTIONS |
| FIRST | | HIGH SLOPE AND/OR HEAVY LOAD | OPTITRACK |
| SECOND | TRACTION SUFFISENT: DEACTIVATION | HIGH SLOPE AND/OR HEAVY LOAD | DIFFLOCK |
| THIRD | | HIGH SLOPE AND/OR HEAVY LOAD | ASR OFF |
| FORTH | | | |
| FIFTH | | | |

648

FIG. 6C

EP 4 335 711 A1

FIG. 7A

| OPTITRACK OFF | OFFROAD MODE OFF | ESC OFF | ASR OFF | MUDDY SITE MODE ON | AXLE LOAD OPTIMIZED OFF |

200

214

202

108

9t

8.5t

8% GROUND SLOPE

SLIPPERY ROAD

-1°C

104

6t

FIG. 7B

EP 4 335 711 A1

FIG. 7C

OPTITRACK OFF

OFFROAD MODE ON

ESC ON

ASR ON

MUDDY SITE MODE OFF

AXLE LOAD OPTIMIZED OFF

200

202

208

210

212

108

110

9t

8.5t

6t

8% GROUND SLOPE

SLIPPERY ROAD

-1°C

FIG. 7D

OPTITRACK OFF | OFFROAD MODE OFF | ESC OFF | ASR ON | MUDDY SITE MODE OFF | AXLE LOAD OPTIMIZED ON

200

212

216

202

114

9t

8.5t

8% GROUND SLOPE

6t

SLIPPERY ROAD    -1°C

FIG. 7E

EP 4 335 711 A1

200

202

AXLE LOAD OPTIMIZED
OFF

MUDDY SITE MODE
OFF

ASR
ON

212

ESC
ON

210

OFFROAD MODE
OFF

OPTITRACK
OFF

112

114

118a

104

120

6t

8.5t

9t

8% GROUND SLOPE

SLIPPERY ROAD

-1°C

**FIG. 7F**

35

FIG. 8

EP 4 335 711 A1

Europäisches
Patentamt

European
Patent Office

Office européen
des brevets

# EUROPEAN SEARCH REPORT

Application Number

EP 23 19 4354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/341654 A1 (PRAKAH-ASANTE KWAKU O [US] ET AL) 30 November 2017 (2017-11-30) * paragraphs [0031] - [0051], [0056], [0058], [0062]; figure 4 * ----- | 1,4-15 | INV. B60W30/18 B60W30/182 B60W40/068 B60W40/10 |
| X | EP 3 766 718 A1 (MAN TRUCK & BUS SE [DE]) 20 January 2021 (2021-01-20) * paragraphs [0011], [0049], [0060], [0061], [0066] - [0068], [0071], [0075] - [0077], [0079]; claim 1 * ----- | 1-8,10, 13-15 | B60W50/08 B60W50/14 |
| X | EP 2 892 780 A1 (JAGUAR LAND ROVER LTD [GB]) 15 July 2015 (2015-07-15) * paragraphs [0150], [0151], [0156], [0157], [0163], [0164], [0183], [0185]; figures 4,5 * ----- | 1-4, 10-15 | |

TECHNICAL FIELDS
SEARCHED        (IPC)

B60W
B60K

The present search report has been drawn up for all claims

| Place of search | Date of completion of the search | Examiner |
|---|---|---|
| Munich | 11 January 2024 | Rameau, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................

& : member of the same patent family, corresponding
document

EPO FORM 1503 03.82 (P04C01)

EP 4 335 711 A1

## ANNEX TO THE EUROPEAN SEARCH REPORT
## ON EUROPEAN PATENT APPLICATION NO.

EP 23 19 4354

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| US 2017341654 | A1 | 30-11-2017 | CN | 107433949 A | 05-12-2017 |
| | | | DE | 102017111493 A1 | 30-11-2017 |
| | | | US | 2017341654 A1 | 30-11-2017 |
| EP 3766718 | A1 | 20-01-2021 | DE | 102019005061 A1 | 21-01-2021 |
| | | | EP | 3766718 A1 | 20-01-2021 |
| EP 2892780 | A1 | 15-07-2015 | CN | 104755346 A | 01-07-2015 |
| | | | CN | 104755348 A | 01-07-2015 |
| | | | CN | 104768824 A | 08-07-2015 |
| | | | CN | 104781126 A | 15-07-2015 |
| | | | CN | 104797479 A | 22-07-2015 |
| | | | EP | 2892739 A1 | 15-07-2015 |
| | | | EP | 2892774 A1 | 15-07-2015 |
| | | | EP | 2892776 A1 | 15-07-2015 |
| | | | EP | 2892778 A1 | 15-07-2015 |
| | | | EP | 2892780 A1 | 15-07-2015 |
| | | | GB | 2508687 A | 11-06-2014 |
| | | | GB | 2508690 A | 11-06-2014 |
| | | | GB | 2508951 A | 18-06-2014 |
| | | | GB | 2508952 A | 18-06-2014 |
| | | | GB | 2509205 A | 25-06-2014 |
| | | | JP | 6059811 B2 | 11-01-2017 |
| | | | JP | 6196308 B2 | 13-09-2017 |
| | | | JP | 6294325 B2 | 14-03-2018 |
| | | | JP | 6342404 B2 | 13-06-2018 |
| | | | JP | 6475619 B2 | 06-03-2019 |
| | | | JP | 2015533707 A | 26-11-2015 |
| | | | JP | 2015534518 A | 03-12-2015 |
| | | | JP | 2015535765 A | 17-12-2015 |
| | | | JP | 2015535766 A | 17-12-2015 |
| | | | JP | 2015535767 A | 17-12-2015 |
| | | | JP | 2017141027 A | 17-08-2017 |
| | | | US | 2015210290 A1 | 30-07-2015 |
| | | | US | 2015217778 A1 | 06-08-2015 |
| | | | US | 2015224989 A1 | 13-08-2015 |
| | | | US | 2015246590 A1 | 03-09-2015 |
| | | | US | 2015298697 A1 | 22-10-2015 |
| | | | WO | 2014037515 A1 | 13-03-2014 |
| | | | WO | 2014037536 A1 | 13-03-2014 |
| | | | WO | 2014037538 A1 | 13-03-2014 |
| | | | WO | 2014037539 A1 | 13-03-2014 |
| | | | WO | 2014037540 A1 | 13-03-2014 |

EPO FORM P0459

For more details about this annex : see Official Journal of the European Patent Office, No. 12/82